(19) **Europäisches Patentamt / European Patent Office / Office européen des brevets**

(11) **EP 4 374 511 B1**

(12) **FASCICULE DE BREVET EUROPEEN**

(45) Date de publication et mention de la délivrance du brevet:
**27.05.2026 Bulletin 2026/22**

(21) Numéro de dépôt: **22754029.1**

(22) Date de dépôt: **15.07.2022**

(51) Classification Internationale des Brevets (IPC):
***H04B 10/70*** *(2013.01)*

(52) Classification Coopérative des Brevets (CPC):
**H04B 10/70**

(86) Numéro de dépôt international:
**PCT/EP2022/069961**

(87) Numéro de publication internationale:
**WO 2023/001721 (26.01.2023 Gazette 2023/04)**

(54) **SYSTÈME DE COMMUNICATION QUANTIQUE PAR PHOTONS INTRIQUÉS**

QUANTENKOMMUNIKATIONSSYSTEM MIT VERSCHRÄNKTEN PHOTONEN

QUANTUM COMMUNICATION SYSTEM USING ENTANGLED PHOTONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.07.2021 FR 2107957**

(43) Date de publication de la demande:
**29.05.2024 Bulletin 2024/22**

(73) Titulaire: **Sangle-Ferriere, Bruno**
**75016 Paris (FR)**

(72) Inventeur: **Sangle-Ferriere, Bruno**
**75016 Paris (FR)**

(74) Mandataire: **Ipsilon**
**12 Avenue d'Italie**
**75013 Paris (FR)**

(56) Documents cités:
• **RUO PENG WANG: "Superluminal telecommunication: an observable contradiction between quantum entanglement and relativistic causality", ARXIV.ORG, CORNELL UNIVERSITY LIBRARY, 201 OLIN LIBRARY CORNELL UNIVERSITY ITHACA, NY 14853, 27 May 2005 (2005-05-27), XP080194984**

## Description

### Domaine technique

La présente invention concerne les méthodes de communication quantique, et plus particulièrement celles utilisant une paire de photons intriqués.

### Technique antérieure

La transmission d'informations se fait actuellement essentiellement grâce à des ondes électromagnétiques, que celles-ci soient de petites longueurs d'ondes, comme la lumière, ou de grandes longueurs d'ondes comme les ondes VHF.

Les ondes transmises peuvent être guidées par des câbles en métal, par des fibres optiques, ou encore transmises à travers l'espace.

Ces méthodes utilisent la propagation des ondes pour transmettre de l'énergie et donc des particules physiques qui, recueillies par un récepteur, permettent de déduire des informations, celles-ci étant codées, par exemple par leur longueur d'onde ou par modulation de la durée des trains d'ondes.

Récemment, des méthodes de communication dite « quantiques » se sont développées.

On peut par exemple utiliser l'état physique d'un photon, tel que sa polarisation, pour transmettre de l'information, par exemple par une fibre optique. La valeur d'un bit est attribuée arbitrairement à une direction, ou un mode de polarisation du photon. Des suites de photons polarisés peuvent alors être envoyés pour transmettre des suites binaires formant un message.

Dans le cadre de la cryptographie quantique, il est notamment connu d'utiliser une paire de photons intriqués pour transmettre une information de manière sécurisée. Des photons intriqués sont des photons dont l'état quantique, par exemple leur polarisation, dépend l'un de l'autre quelle que soit la distance les séparant.

Ce phénomène d'intrication quantique a été observé et démontré expérimentalement à plusieurs reprises, comme par exemple dans l'article de Shasi Prabkhar et al. « Two-photon quantum interference and entanglement at 2.1 $\mu$m" (Sci Adv, 2020)

Le brevet KR101003886B1 décrit un système de transmission d'information cryptée dans lequel des photons intriqués sont émis simultanément et chacun envoyés vers deux cibles positionnées à des endroits différents et souhaitant communiquer entre eux. Les photons reçus par les deux cibles forment des suites aléatoires intriquées de bits conjugués, ces suites étant utilisées comme clés de chiffrage cryptographiques. Ce système permet la réception presque instantanée en deux endroits différents d'une même suite de nombres aléatoires mais ne permet la transmission d'information.

L'article de Wang « Superluminal telecommunication: an observable contradiction between quantum entanglement and relativistic causality » divulgue un système de communication quantique permettant une transmission d'informations super luminale grâce à une paire de photons intriqués envoyés vers deux récepteurs souhaitant communiquer entre eux. Les photons sont intriqués, et une polarisation linéaire est mesurée pour le photon arrivant au premier récepteur selon différentes directions à 45° les unes des autres. Au deuxième récepteur, le deuxième photon est démultiplié et la polarisation moyenne du flux démultiplié est mesurée afin de déterminer selon quelle direction le premier photon a été mesuré.

La polarisation d'un photon n'est cependant pas nécessairement binaire comme l'est celle d'un spin ou même quaternaire. Elle peut notamment être représentée sur la sphère de Jones qui caractérise l'orientation et l'ellipse de la polarisation : une polarisation peut en effet être linéaire, le champ électrique étant toujours parallèle à un axe perpendiculaire à la direction de propagation du photon, ou circulaire, le champ électrique tournant autour de cet axe, ou entre les deux : le champ électrique parcourant une ellipse atour de l'axe de propagation. Dans le cas où la polarisation n'est pas circulaire, l'orientation mesure la direction de cet axe, et l'excentricité mesure l'aplatissement de l'ellipse.

Les dispositifs précités ne permettent pas d'exploiter toutes les configurations de la polarisation et sont de fait limités dans le nombre et le type de d'information qu'il est possible de transmettre.

### Exposé de l'invention

Il existe un besoin pour perfectionner encore les systèmes et méthodes de communication quantique, notamment ceux permettant de transmettre rapidement des informations entre deux points, notamment des valeurs continues, de manière quasi-instantanée et sans délai dû à la distance de transmission.

### Résumé de l'invention

Un premier aspect ne faisant pas partie de l'invention et répondant à ce besoin concerne un système de communication quantique comportant :

- Un émetteur de photons intriqués comportant une source configurée pour générer au moins une paire de photons intriqués comportant un premier photon émis sur un premier chemin de propagation, et simultanément un deuxième photon émis sur un deuxième chemin de propagation différent du premier chemin de propagation ;
- Un premier récepteur disposé sur le premier chemin de propagation comportant un absorbeur complexe configuré pour absorber le photon dans un état de polarisation choisi parmi les états d'au moins deux paires différentes d'états de polarisation complémentaires, à l'exception d'exactement deux paires de polarisations linéaires perpendiculaires dont les polarisations de l'une des paires sont à 45° des directions de polarisation de l'autre paire ;

- Un deuxième récepteur disposé sur le deuxième chemin de propagation de façon à être atteint par le deuxième photon après que le premier photon ait atteint le premier récepteur, ledit deuxième récepteur comportant :

    - un amplificateur optique permettant de démultiplier le deuxième photon en conservant sa polarisation et,
    - disposé en aval de l'amplificateur, un instrument de mesure permettant de mesurer la polarisation moyenne des photons démultipliés.

Le système selon ce premier aspect est agencé pour retransmettre de façon quasi instantanée une série de valeurs, continues ou discrètes, entre deux lieux.

Les premier et deuxièmes photons étant intriqués, l'absorption du premier photon au premier récepteur détermine instantanément la polarisation du deuxième photon, notamment avant que celui-ci n'atteigne le deuxième récepteur.

La mesure de la polarisation moyenne des photons démultipliés au deuxième récepteur permet alors de détecter dans quel état de polarisation le premier photon a été absorbé et d'en déduire l'information transmise.

Ce système permet par conséquent de transmettre des informations sans temps de latence, indépendamment de la distance entre les deux endroits souhaitant communiquer, et en utilisant uniquement des photons, ce qui ne nécessite que peu d'énergie.

Le système est par exemple utilisé pour des réseaux de communication et informatique sur Terre, dans le ciel et/ou dans l'espace, notamment pour communiquer avec des systèmes éloignés de la Terre, tels que des satellites ou des vaisseaux spatiaux.

## Polarisations de Jones

Par « états de polarisation complémentaires », aussi désigné dans la suite par « états de polarisation d'absorption complémentaires », on entend deux états de polarisation d'une lumière pour lesquels la modification de la polarisation de ladite lumière par des éléments d'optique linéaire, notamment des miroirs, des lames et/ou prismes biréfringents dont des lames quart d'onde, permet pour l'une, son absorption par un premier filtre polarisant, et pour l'autre son absorption par un second filtre polarisant selon une polarisation orthogonale à celle selon laquelle le premier filtre polarisant peut absorber.

Dans la suite, on utilise indifféremment les termes « état de polarisation » et « polarisation ».

Le premier récepteur est avantageusement agencé pour que son utilisateur puisse choisir l'état de polarisation dans lequel le photon est absorbé parmi l'une quelconque des polarisations possibles telles que définies par le formalisme de Jones, notamment parmi un ensemble de polarisations elliptiques (aussi dites « ellipsoïdales ») caractérisées par l'orientation et l'ellipse de la polarisation.

On peut ainsi faire varier la polarisation selon laquelle sont absorbés les photons par le premier récepteur afin de transmettre une série d'informations au second récepteur.

En choisissant par exemple 10 directions de polarisation différentes, par exemple espacées de 9° les unes des autres, et 21 déphasages différents, espacés de 9° aussi l'un de l'autre, on peut définir 210 états de polarisation différents et ainsi transmettre 210 signaux différents.

On peut par exemple transmettre les lettres de l'alphabet en majuscules, en minuscules, les chiffres et un certain nombre d'autres caractères spéciaux, pour chacune des paires de photons intriqués atteignant les récepteurs.

## Absorbeur complexe

On qualifie d'« absorbeur complexe » un ensemble atteint par le premier photon permettant de déterminer une paire de polarisations complémentaires parmi un certain nombre de paires de polarisations complémentaires, et d'absorber le premier photon dans l'un des deux états de polarisation de la paire prédéterminée.

De préférence, l'absorbeur complexe du premier récepteur est configuré pour absorber le photon dans un état d'une paire prédéterminée de polarisations complémentaires, choisi parmi les états d'au moins trois paires différentes de polarisations complémentaires, et de préférence parmi un nombre de paires différentes de polarisations complémentaires choisi selon le nombre de valeurs différentes à transmettre, comme décrit plus haut.

De préférence, l'absorbeur complexe comporte:

- au moins un instrument d'absorption permettant d'absorber le photon dans l'un ou l'autre de deux états d'une paire de polarisations complémentaires, par exemple deux polarisations linéaires orthogonales.
- un modificateur de polarisation disposé en amont dudit instrument d'absorption et configuré pour transformer la polarisation du premier photon vers la polarisation choisie selon laquelle ledit instrument d'absorption absorbe les photons.

Par « polarisation choisie », on entend une paire de polarisations complémentaires prédéterminée selon l'information à transmettre.

## Modificateur de polarisation

La polarisation linéaire d'un photon peut être transformée en polarisation ellipsoïdale telle que représentée par le formalisme de Jones en modifiant dans un premier temps l'orientation de la polarisation d'un photon de polarisation linéaire et de direction connue, répartissant ainsi de façon prédéterminée le champ électrique selon un axe x et un axe y perpendiculaire à l'axe x, puis, dans un deuxième temps en modifiant la phase du champ électrique selon l'une de deux directions perpendiculaires, par exemple l'axe y.

Le modificateur de polarisation comporte de préférence un modificateur de direction de polarisation disposé en amont d'un modificateur de phase de polarisation.

Par exemple, si $\theta$ est l'angle de rotation de la polarisation linéaire et $\phi$ le déphasage selon l'axe y, $\omega$ étant la pulsation de l'onde, les composantes $E_x$ et $E_y$ de champ électrique après la rotation sont :

$$E_x = E \, Cos \, (\theta) \, Cos \, (\omega t)$$

$$E_y = E \, Sin \, (\theta) \, Cos \, (\omega t)$$

Et après le déphasage:

$$E_x = E \, Cos \, (\theta) \, Cos \, (\omega t)$$

$$E_y = E \, Sin \, (\theta) \, Cos \, (\omega t + \phi)$$

## Modificateur de la direction de polarisation

Une direction de polarisation linéaire peut être modifiée de différentes façons, par exemple par une lame demi-onde ou alternativement par une double-lame quart d'onde.

Le modificateur de direction de polarisation peut comporter deux lames quart d'onde disposées l'une après l'autre sur le chemin de propagation du premier photon, l'orientation de l'une au moins des deux lames étant variable.

La première lame quart-d'onde modifie par exemple la polarisation linéaire en polarisation circulaire et la seconde lame quart-d'onde transforme par exemple la polarisation circulaire en polarisation linéaire dont la direction est orientée selon un axe dépendant de la direction de l'axe de la seconde lame quart d'onde.

Une rotation de l'axe de cette seconde lame permet donc de modifier la direction de la polarisation linéaire du photon. Si la lame est une lame demi-onde, la rotation de cette dite lame demi-onde permet de modifier la direction de la polarisation linéaire du photon.

Alternativement, l'orientation de la première lame quart d'onde peut être modifiée, celle de la seconde étant fixe, ou bien les orientations des deux lames quart d'onde peuvent être modifiées.

La rotation d'une lame quart d'onde ou d'une lame demi-onde est obtenue par exemple par asservissement mécanique à un capteur ou à un dispositif commandé électriquement permettant sa rotation, par exemple en frottant sur un axe mis en mouvement par un matériau piézo-électrique ou par un dispositif de moteur électrique, par exemple à courant continu.

Alternativement, plusieurs dispositifs de rotation de la polarisation linéaire peuvent être utilisés, chacun permettant des angles de rotation différents, par exemples fixes, mais pouvant tout aussi être modifiables, des sélecteurs permettant d'envoyer les photons vers l'un de ces dispositifs de rotation et, en sortie dudit dispositif de rotation, de conduire ledit photon vers un guide d'onde commun ou un axe de transmission commun.

Ces sélecteurs peuvent comporter un miroir dont la direction de l'axe est commandé par exemple par un dispositif électrique, ou , alternativement constitués d'un prisme ou d'une lame en matériau dont l'indice de réfraction dépend d'un champ électrique : une cellule de Pockels, ou un matériau transparent d'indice de réfraction non linéaire, un autre flux lumineux, par exemple transversal et de préférence de longueur d'onde différente de celle du photon et ne pouvant générer de photons de la même longueur d'onde que celle du photon faisant varier l'indice de réfraction dudit matériau non linéaire et commandant ainsi l'emplacement et éventuellement la direction de sortie du photon dudit matériau. L'inertie de rotation d'une lame quart d'onde pouvant être importante, les photons peuvent être envoyés successivement vers différentes lames quart d'onde dont la direction aura été ajustée préalablement par exemple par l'un des dispositifs de rotation mécanique décrits précédemment laissant ainsi le temps de modifier la direction de chacune de ces lames quart d'onde entre deux passages de photons.

En variante, on peut utiliser des matériaux chiraux ou rotatifs pour modifier une direction de polarisation linéaire.

Le modificateur de direction de polarisation peut comporter une lame ou un prisme en matériau chiral ou rotatif affectant la rotation de la polarisation d'un angle dépendant de l'endroit par lequel l'onde pénètre dans ledit matériau chiral ou rotatif. Le matériau peut notamment être disposé entre deux cellules de Pockels.

Le premier photon peut être projeté sur une première lame ou un premier prisme formant une cellule de Pockels dont l'indice de réfraction est contrôlé par un champ électrique pour en ressortir en des endroits différents, notamment sur une lame ou un prisme intermédiaire en matériau au moins en partie chiral ou rotatif faisant tourner l'axe de polarisation électrique du photon d'un angle dépendant de l'endroit par lequel l'onde pénètre la dite lame ou prisme intermédiaire, avant de pénétrer une seconde lame ou un second prisme formant un une cellule de Pockels dont l'indice de réfraction est ajusté symétriquement par rapport à celui de la première lame ou du premier prisme pour faire ressortir le photon selon la même direction que si l'indice de réfraction de la première lame ou prisme et de la seconde lame ou prisme avaient tous les deux une valeur fixée. Une troisième lame dont l'indice de réfraction peut être ajusté, par exemple électriquement est avantageusement placé après la deuxième lame ou prisme pour permettre de rendre l'endroit de la sortie du photon de l'ensemble de lames et prismes indépendant de l'indice de réfraction choisi pour la première lame ou prisme.

La lame ou prisme en matériau intermédiaire est par exemple composée de deux prismes symétriques accolés de même indice de réfraction mais ayant des pouvoirs chiraux ou rotatifs différents, le premier des deux prismes ayant par exemple un pouvoir chiral ou rotatif et le second n'en ayant pas ou bien faisant tourner le champ électrique dans le sens contraire de la rotation imposée par le premier prisme.

L'un des deux prismes intermédiaires peut comporter un matériau chiral, par exemple des nanoparticules de séléniure de cadmium (CdsE) de diamètre environ 1.4 à 2.4 nm tel que décrit dans l'article de Visheratina, Anastasia, and Nicholas A. Kotov. "Inorganic nanostructures with strong chiroptical activity." (CCS Chemistry 2.3 (2020): 583-604.). ; l'autre prisme intermédiaire n'étant de préférence pas chiral ou alternativement étant de chiralité inverse à celle dudit premier prisme intermédiaire. La rotation du champ électrique des ondes traversant un matériau chiral étant proportionnelle à l'épaisseur traversant le dit matériau chiral, la rotation du champ électrique traversant la lame intermédiaire dépend de emplacement par lequel elle est pénétrée par la lumière qui la traverse.

L'un des deux prismes intermédiaires peut encore comporter un matériau « rotatif », tel qu'une superposition d'un nombre paire de lames quart d'ondes empilées les unes sur les autres dans des directions incrémentées à chaque couche d'un angle prédéterminé, de telle sorte qu'une onde polarisée linéairement selon l'axe de la première tranche du matériau ressorte de l'empilement avec une polarisation tournée d'un angle proportionnel à l'épaisseur de l'empilement.

Modificateur de phase de polarisation

Un second dispositif, dit « modificateur de phase de polarisation » peut être disposé en aval du modificateur de direction de polarisation, afin de déphaser d'un angle prédéterminé la composante du champ électrique du photon selon l'un de deux axes fixes.

De préférence, le modificateur de phase de polarisation comporte une première lame ou prisme biréfringent agencé pour partager le faisceau en deux ondes électromagnétiques de polarisation linéaire, l'une selon un premier axe, l'autre selon un second axe, et une lame à retard d'indice de réfraction variable disposée sur le second axe.

Par « faisceau », il faut comprendre l'onde lumineuse qu'est le premier photon au sens de la dualité de la lumière.

La lame à retard fait acquérir à l'onde orientée selon le second axe un déphasage prédéterminé par rapport à l'onde orientée selon le premier axe, avant de lui être de nouveau mélangée par un nouvelle lame ou prisme biréfringent permettant de réunir selon un même axe les deux ondes dont les champs de polarisations sont perpendiculaires.

La lame à retard peut comporter une cellule de Pockels ou un matériau non linéaire. L'indice de réfraction variable permet de choisir le déphasage imposée à l'onde orientée selon le second axe.

Dans un premier exemple de mise en œuvre, comme décrit plus haut, le modificateur de phase fait tourner une polarisation linéaire d'angles espacés de 9° variant entre -45° et +36° et fait varier la phase d'angles espacés de 9° entre -90° et +90° définissant ainsi 210 états de polarisations possibles. Comme décrit plus bas, 209 des 210 polarisations possibles sont par exemple utilisées pour coder des données et la 210eme polarisation linéaire est utilisée pour absorber tout photon intriqué reçu dans un temps prédéterminé après la réception d'un photon ayant servi au codage d'une donnée.

Dans un deuxième exemple de mise en œuvre, le modificateur de phase fait tourner l'axe de polarisation de 45° avant que le photon soit absorbé pour transmettre par exemple un 0, et transforme la polarisation du photon en polarisation circulaire pour transmettre par exemple un 1.

**Réflexion du premier photon**

L'invention a pour objet, un système de communication quantique comportant :

- Un émetteur de photons intriqués comportant une source configurée pour générer au moins une paire de photons intriqués comportant un premier photon émis sur un premier chemin de propagation, et simultanément un deuxième photon émis sur un deuxième chemin de propagation différent du premier chemin de propagation;

- Un premier récepteur disposé sur le premier chemin de propagation, comportant :

  - au moins un premier instrument d'absorption, agencé pour absorber le premier photon dans l'un de deux états d'une paire de polarisations complémentaires, la polarisation du photon étant indéterminée dans la base observable selon laquelle le premier instrument absorbe les photons,

  - un sélecteur optique disposé en amont dudit au moins un premier instrument et configuré pour soit laisser passer le premier photon vers ledit au moins un premier instrument de mesure, soit l'empêcher d'être mesuré ;

• Un deuxième récepteur disposé sur le deuxième chemin de propagation de façon à être atteint par le deuxième photon après que le premier photon ait atteint le sélecteur optique et/ou après qu'il puisse avoir atteint l'instrument de mesure du premier récepteur, ledit deuxième récepteur comportant un amplificateur optique permettant de démultiplier le deuxième photon en conservant sa polarisation et, disposé en aval de l'amplificateur, un instrument de mesure permettant de mesurer l'état quantique moyen des photons démultipliés .

Par « base observable », on désigne une base de deux polarisations complémentaires, par exemple deux polarisations linéaires orthogonales.

Par « polarisation indéterminée dans une base observable », on désigne un photon dont la polarisation telle qu'observée dans l'une des deux polarisations prédéterminées d'une base observable n'est pas définie, c'est-à-dire est aléatoire, par exemple de façon équiprobable.

Les premier et deuxièmes photons étant intriqués, l'absorption du premier photon au premier récepteur détermine instantanément la polarisation du deuxième photon, notamment avant que celui-ci n'atteigne le deuxième récepteur.

La mesure de la polarisation des photons démultipliés au deuxième récepteur permet alors de détecter si le premier photon a, ou non, été absorbé, et en déduire quelle information a été transmise. L'information transmise par ce système est par exemple de type binaire.

Le premier récepteur peut comporter au moins un deuxième instrument d'absorption, le sélecteur optique étant disposé en amont du premier et deuxième instrument et configuré pour soit laisser passer le premier photon en le dirigeant vers l'un ou l'autre des instruments, soit l'empêcher d'être absorbé.

L'utilisation de deux instruments permet de transmettre trois informations différentes, par exemple les valeurs 0, 1 et 2, la valeur 0 étant par exemple affecté à la réflexion, la valeur 1 au premier instrument, et la valeur 2 au second instrument.

## Sélecteur optique

Le sélecteur optique du premier récepteur peut être de type varié. Il est avantageusement placé en amont de l'instrument de mesure afin de pouvoir empêcher le photon incident d'atteindre l'instrument de mesure, si cela est souhaité.

Pour ce faire, le sélecteur comporte de préférence un réflecteur, notamment un miroir contrôlé, permettant par exemple de réfléchir le premier photon sur un chemin de propagation différent de son chemin de propagation incident, notamment sur un chemin de propagation ne comportant pas l'instrument de mesure.

Par « miroir contrôlé », on désigne un dispositif dont certaines propriétés, par exemple les propriétés de réfraction ou la direction de réflexion sont contrôlées par un dispositif annexe lié au miroir, notamment un dispositif électronique, par exemple générant un champ électrique.

Le sélecteur optique comporte de préférence un dispositif dont l'indice de réfraction et/ou la direction de réflexion sont contrôlés, notamment contrôlés grâce un champ électrique ou un flux lumineux.

Alternativement, le sélecteur optique comporte, par exemple, un miroir de Bragg, notamment un miroir de Bragg dont la direction de réflexion est commandée par un matériel piézo-électrique contrôlé lui-même par un champ électrique.

En variante, le sélecteur optique comporte un prisme, notamment comportant des cellules de Pockels dont l'indice de réfraction est contrôlé par un champ électrique, l'application d'un champ électrique pouvant diriger le photon vers le ou l'un des instruments de mesure ou vers un miroir de Bragg avantageusement incliné par rapport à la direction d'incidence des ondes électromagnétiques l'atteignant, de telle sorte que les dites ondes sont réfléchies vers un endroit de préférence différent de celui dont elles proviennent à l'entrée du prisme.

Dans une autre variante, le sélecteur optique comporte un ou une succession de filtres de Bragg dont certaines couches sont des cellules de Pockels dont l'indice de réfraction est contrôlé par un champ électrique, le dit filtre de Bragg réfléchissant ou laissant passer l'onde lumineuse selon l'application ou non du champ électrique

Alternativement les cellules des Pockels utilisées ci-dessus sont remplacées par des cristaux non linéaires éclairés par une lumière puissante pouvant faire varier l'indice de réfraction du milieu traversé par le photon, la longueur d'onde de la lumière puissante étant de préférence différente de la longueur d'onde du photon.

Le sélecteur optique permet notamment d'orienter les photons dans trois directions différentes, une direction permettant par exemple aux photons de ne pas être détectés, une seconde permettant de mesurer une polarisation linéaire des photons et une troisième permettant de mesurer une polarisation circulaire.

## Dispositif de protection

De préférence, le système de communication quantique comporte de plus un dispositif de protection de l'état quantique d'au moins un photon, notamment un dispositif qui empêche la mesure ou l'absorption d'au moins un photon, disposé à proximité du premier récepteur de façon à permettre de protéger l'état quantique du premier photon après sa réflexion, l'empêchant d'être absorbé ou mesuré par un ou des instruments de mesure, ledit état quantique du premier photon étant protégé au moins jusqu'à ce que le deuxième photon ait été démultiplié au deuxième récepteur.

Le dispositif de protection de l'état quantique est placé proche du premier récepteur de façon à protéger l'état quantique du premier photon lorsque celui-ci est réfléchi et/ou dévié de son chemin de propagation incident par le sélecteur optique pour ne pas y être observé, c'est-à-dire lorsqu'on ne souhaite pas qu'il soit absorbé par l'instrument de mesure du premier récepteur.

De préférence, le dispositif de protection de l'état quantique comporte un espace transparent, notamment un espace transparent et au moins un miroir. L'espace transparent peut être vide ou rempli de gaz ou de liquide.

De préférence, il comporte plusieurs miroirs de Bragg, agencés par rapport à l'espace transparent de façon à piéger le photon qu'il reçoit sur un chemin de longueur appropriée comme décrit plus haut, c'est-à-dire correspondant au temps qu'il faut pour que le second photon ayant atteint le second récepteur y soit amplifié.

En variante, le dispositif de protection comporte une fibre optique de longueur permettant au premier photon d'y circuler en attendant que le second photon ayant atteint le second récepteur y soit amplifié.

Dans une autre variante, le dispositif peut être une portion d'espace ou d'atmosphère vide ou rempli de gaz dont on s'assure qu'elle n'est pas traversée par un objet réfléchissant ou absorbant la lumière.

**Instrument d'absorption du premier photon**

Au premier récepteur, le premier photon peut être absorbé par au moins un instrument d'absorption dans l'un de deux états d'une paire de polarisations complémentaires.

De préférence, l'instrument d'absorption comporte au moins un filtre permettant d'envoyer le premier photon vers au moins un détecteur de photons, notamment vers l'un ou l'autre de deux détecteurs de photons selon l'état de polarisation du premier photon, le filtre étant de préférence un prisme ou une lame en matériau biréfringent.

L'instrument d'absorption peut encore comporter un filtre polarisant et un détecteur de photons situé à la suite dudit filtre polarisant.

L'instrument d'absorption peut encore comporter un miroir semi transparent reflétant les photons polarisés circulairement vers un premier détecteur de photons et laissant passer les autres vers un deuxième détecteur de photons, comme décrit dans l'article de Mai, Wending, et al. "Broadband transparent chiral mirrors: Design methodology and bandwidth analysis." (AIP Advances 9.4 (2019): 045305).

**Emission des photons**

Emetteur de paires de photons

De préférence, l'émetteur génère des paires de photons intriqués par réduction paramétrique spontanée (SPDC), c'est-à-dire suivant un procédé dans lequel un photon initial, aussi appelé photon « pompe », est dédoublé et sa fréquence divisée par deux par un phénomène de mélange à quatre ondes, dans un milieu optique d'indice de réfraction non linéaire, comme cela est décrit dans l'article de Amanti et. al, « les sources intégrées de photons intriqués au cœur des technologies quantiques » (Photoniques, numéro 91, 2018).

Ce type d'émetteur de paires de photons permet de produire des photons dont l'intrication est relativement robuste, mais présente le désavantage de parfois produire plus d'une paire de photons à la fois, ce qui n'est pas désirable car non contrôlé. Des dispositifs annexes peuvent être mis en place pour traiter ces paires multiples « parasites », comme cela est décrit dans la suite.

En variante, on peut utiliser un émetteur comportant une boîte quantique pour générer des paires de photons intriqués, comme décrit dans l'article précité, ce qui permet d'obtenir des paires de manière plus régulière. Les propriétés d'intrication des photons obtenus avec une telle méthode peuvent néanmoins parfois être instables.

On peut aussi utiliser des fibres optiques en cristal biréfringent tel que décrit dans l'article de Smith et. al « Photon pair generation in birefringent optical fibers" (Optics Express, Vol 17, Issue 26, 2009).

De préférence, l'émetteur est configuré pour générer successivement une pluralité de paires de photons intriqués.

On peut envoyer les photons intriqués à la sortie de l'émetteur sur les premier et deuxième chemins de propagation de diverses façons.

Emission selon une polarisation prédéterminée

Les photons sont de préférence émis selon une polarisation prédéterminée. Par « polarisation prédéterminée », on entend dans l'un des deux états d'une paire prédéterminée de polarisations complémentaires, par exemple une polarisation linéaire d'une certaine direction. Une lame biréfringente peut par exemple séparer les deux photons intriqués selon leur polarisation linéaire verticale ou horizontale.

Une polarisation prédéterminée des photons intriqués envoyés à chacun des récepteurs permet notamment de connaitre la probabilité d'un état selon une polarisation ou sa polarisation complémentaire pour toute paire de polarisations complémentaires choisie.

On peut ainsi générer des séries de bits aléatoires à la réception des dits photons par les récepteurs, les dites séries étant complémentaires aux deux récepteurs, la polarisation d'un photon reçu au second récepteur étant la polarisation complémentaire de la polarisation observée au premier récepteur.

Une polarisation prédéterminée est aussi nécessaire lors que l'on utilise des lames quart d'onde au premier récepteur pour faire tourner la direction de polarisation du premier photon.

Pour émettre des photons avec selon une polarisation linéaire prédéterminée, on dispose par exemple à la sortie de l'émetteur une lame ou un prisme comportant un matériau optiquement transparent biréfringent, par exemple du niobate de Lithium ou du rutile (TiO2), dont les indices optiques dépendent de l'axe de polarisation de la lumière par lequel transite au moins l'un des deux photons.

Ce dernier sort alors du prisme à l'un de deux endroits différents, selon sa polarisation linéaire.

Si la source de photons intriqués émet les deux photons dans la même direction et selon un axe perpendiculaire à l'axe ordinaire du matériau optiquement transparent biréfringent, on collecte à la sortie du prisme, à l'endroit par lequel sortent les ondes électromagnétiques dont le champ électrique est parallèle à l'axe ordinaire du matériau optiquement transparent biréfringent, le premier photon pour l'envoyer vers le premier récepteur.

De la même manière, on collecte le deuxième photon sortant par l'endroit où sortent les ondes électromagnétiques dont le champ est perpendiculaire à l'axe ordinaire afin de l'envoyer vers le second récepteur.

Dans le cas où les deux photons intriqués sont générés depuis l'émetteur à des endroits et/ou dans des directions différentes, on peut projeter chacun des deux photons sur des prismes biréfringents dans une direction perpendiculaire à l'axe ordinaire de chacun des prismes et rediriger chaque photon vers le récepteur qui lui est destiné, les photons sortant par des endroits différents des prismes étant alors de préférence perdus ou détruits par projection sur une surface absorbante.

On peut par exemple utiliser pour le premier photon intriqué celui sortant d'une première lame biréfringente ou d'un premier cristal biréfringent avec la polarisation linéaire parallèle au premier axe, et comme second photon intriqué celui sortant avec une polarisation linéaire parallèle à un premier axe du cristal utilisé pour la seconde lame ou le second prisme qui aura été ajusté pour permettre la sortie des photons selon une polarisation prédéterminée correspondant à la polarisation des photons intriqués aux photons sortant de la première lame ou du premier prisme biréfringent avec une direction parallèle au premier axe.

Pour faciliter le transport desdits photons vers les récepteurs, on place, de préférence, à la sortie des endroits d'où sortent les photons des prismes, des lames à retard biréfringentes transformant les polarisations linéaires desdits photons en polarisation circulaires.

On dispose alors, de préférence une autre lame à retard biréfringente à l'entrée de chacun des récepteurs pour retransformer les polarisations circulaires des photons en polarisation linéaires, cette transformation en polarisation linéaire permettant d'ajuster précisément l'axe de polarisation.

## Transmission des photons

Les photons peuvent être transmis des émetteurs vers les récepteurs à travers l'espace, par l'atmosphère, une fibre optique ou une combinaison de ces moyens.

On peut utiliser des lentilles pour la transmission des photons, notamment pour la transmission à travers l'espace ou l'atmosphère. Le cas échéant, on dispose de préférence des couches anti-reflet sur lesdites lentilles. La taille des lentilles utilisées est de préférence adaptée et la longueur de la transmission spatiale ou atmosphérique des photons.

On peut utiliser pour ajuster la direction d'émission des photons conjugués pour la transmission spatiale ou atmosphérique, des miroirs conjugués qui réfléchissent la lumière émise à l'émetteur. Un émetteur de lumière laser peut par exemple scanner un espace afin d'y détecter le récepteur, le récepteur lui réfléchissant la lumière émise et la direction des photons conjugués étant alors ajustée pour être parallèle ou confondue avec la direction de la lumière réfléchie par les miroirs conjugués.

La lumière émise par l'émetteur de lumière laser peut être de longueur d'onde proche de la longueur d'onde des photons intriqués et introduite dans l'objectif utilisé par les photons par un prisme dichroïque.

En variante, si la longueur d'onde est la même que celle des photons intriqués, la lumière peut être introduite par un prisme biréfringent lorsque lesdits photons sont de polarisation linéaire, la polarisation de la lumière servant au guidage étant alors perpendiculaire à la polarisation des photons intriqués dirigés vers le même récepteur. Une cellule de Pockels en amont des récepteurs peut servir à guider la lumière vers les miroirs conjugués lors de l'arrivée de la lumière de guidage.

Dans une autre variante, les ondes lumineuses servant à la visée peuvent être émises parallèlement aux photons intriqués mais éloignées par exemple quelques centimètres pour être réfléchies par des miroirs conjugués.

Dans une autre variante, on peut ne pas utiliser de miroir conjugué mais viser de même les récepteurs ou des cibles proches de ceux-ci, l'information suivant laquelle les cibles sont reçues étant communiquées par un autre moyen de communication, notamment par signal hertzien ou par transmission quantique.

La zone à scanner peut être identifiée par reconnaissance cartographique de la zone dans laquelle les dits récepteurs sont susceptibles de se trouver.

On peut par ailleurs utiliser le modificateur de phase précité lorsque les récepteurs sont en rotation relative par rapport à l'émetteur, notamment à cause de la rotation de la terre et des satellites, pour permette aux photons émis dans une direction fixe par rapport à l'émetteur de rentrer dans chacun des récepteurs avec une direction fixe et déterminée par rapport à celui-ci.

**Procédés d'étalonnage**

Les différents médias traversés par les photons depuis leur lieu d'émission jusqu'aux deux récepteurs peuvent donner lieu à des modifications de leur phase non nécessairement souhaitées ou prévues.

De plus, ces modifications peuvent être différentes selon que les photons soient dirigés vers le premier ou le second récepteur. Enfin, ces modifications peuvent varier au cours du temps en fonction notamment de la météo ou de la température des matériaux lors de leur utilisation.

On peut étalonner périodiquement le système selon l'invention en faisant absorber les photons par le premier récepteur dans des polarisations appartenant à des paires prédéterminées de polarisations complémentaires et en observant pour chacune de ces paires l'une des deux polarisations possibles dans lequel le photon intriqué est détecté par le second récepteur.

Ainsi, un procédé d'étalonnage, ne faisant pas partie de la présente invention, d'un système selon le premier aspect permettant de déterminer l'état de polarisation d'un photon atteignant le deuxième récepteur en fonction de l'état de polarisation dans lequel son photon intriqué a été absorbé au premier récepteur, procédé comportant les étapes consiste à :

- Générer des paires de photons intriqués à partir d'un émetteur, le premier photon de la paire étant émis vers un premier récepteur et le deuxième photon de la paire étant émis simultanément vers un deuxième récepteur, les premiers et deuxièmes photons étant intriqués selon leur état de polarisation,
- Absorber les premiers photons au premier récepteur dans une paire de polarisations prédéterminée, mémoriser dans laquelle des deux polarisations possibles chaque photon a été absorbé et stopper l'envoi de photons par l'émetteur dès qu'un nombre prédéterminé de chacune des polarisations différentes ont été observées,
- Au second récepteur, dupliquer les deuxièmes photons en des flux de photons démultipliés grâce à un dispositif d'amplification, chaque photon démultiplié ayant conservé l'état de polarisation du deuxième photon,
- Mesurer les états de polarisation, c'est-à-dire les directions de polarisation et déphasages de chaque flux de photons démultipliés, et mémoriser ces mesures ainsi que leurs heures de réception,
- Transmettre la liste des polarisations et heures de réception des photons mémorisées du premier récepteur au second récepteur,
- Supprimer de la liste des photons reçus au second récepteur les photons ne correspondant pas à des photons reçus au premier récepteur et, de même, supprimer de la liste des photons reçus au premier détecteur les photons dont le photon correspondant n'a pas été reçu au second récepteur, et
- Calculer à l'aide d'une part : de la connaissance de l'état de polarisation de deux photons détectés dans des polarisation complémentaires au premier récepteur et dont les photons intriqués ont atteint le second récepteur, et d'autre part de la connaissance de l'état de polarisation des photons intriqués correspondant reçus au second récepteur, la matrice de Jones permettant de déduire de la polarisation des photons reçus au premier récepteur la polarisation des photons reçus au second récepteur.

La mémorisation des états de même que le calcul de la matrice de Jones s'effectuent par tout dispositif électronique adapté, par exemple un microcontrôleur.

La matrice de Jones ainsi calculée permet de calculer la polarisation du second photon intriqué reçu au second récepteur en fonction de la polarisation d'absorption du premier photon par l'absorbeur complexe situé au premier récepteur.

Un second étalonnage peut être fait consistant à déterminer la probabilité pour tout photon arrivant au second récepteur dont le photon intriqué a été absorbé au cours de son transit vers le premier détecteur d'appartenir à chaque gamme de paires de polarisations complémentaires détectable ou identifiable par le second récepteur ; la gamme d'une polarisation P étant définie comme l'ensemble des polarisations assimilées par l'instrument de mesure de polarisation comme étant de polarisation P.

Ainsi, un procédé d'étalonnage, ne faisant pas partie de la présente invention, d'un système selon le premier aspect permettant de déterminer la probabilité de perdre un photon lors de son transit de l'émetteur au premier récepteur consiste à :

- Configurer l'absorbeur complexe du premier récepteur pour absorber les photons reçus au premier récepteur dans l'une de deux polarisations complémentaires d'une paire de polarisation absorption,

- Générer successivement plusieurs paires de photons intriqués à partir d'un émetteur, le premier photon de la paire étant émis vers un premier récepteur et le deuxième photon de la paire étant émis simultanément vers un deuxième récepteur, les premier et deuxième photons étant intriqués selon leur état de polarisation,

- Compter le nombre de photons reçus au second récepteur dans chacune des gammes de polarisations détectables par le second récepteur autres que l'une des deux gammes de polarisations des photons intriqués des photons absorbés par le premier détecteur.

On peut ainsi détecter des gammes de polarisations dans lesquelles les photons intriqués de photons perdus en cours de transmission lors de leur transit vers le premier détecteur arrivent en priorité, ou de façon le plus probables et ainsi de préférence éviter d'utiliser les polarisations d'absorptions correspondantes pour transmettre des données du premier au deuxième récepteur.

On peut aussi en faisant le rapport entre le nombre de photons reçus au second récepteur avec l'une des polarisations correspondant à l'une de deux polarisations d'absorption au premier récepteur, calculer un taux de transmission des photons entre l'émetteur et le second récepteur.

### Instrument de mesure du second récepteur

L'instrument de mesure du deuxième récepteur comporte de préférence au moins un détecteur de photons agencé pour mesurer la polarisation de la lumière issue de la démultiplication du deuxième photon.

L'instrument de mesure du second récepteur comporte par exemple une succession de lames semi-réfléchissantes disposées en aval de l'amplificateur optique, lesdites lames dirigeant le flux de photons démultipliés, c'est-à-dire le flux lumineux, avec une égale intensité vers des instruments de mesure de polarisation agencés par exemple pour mesurer l'intensité du flux selon deux axes perpendiculaires et/ou le déphasage de la lumière entre ces deux mêmes axes.

La lumière peut aussi être dirigée vers divers filtres polarisants après être passée par une ou une succession de lentilles qui agrandissent la section du faisceau lumineux permettant ainsi à plusieurs miroirs ou lentilles de diriger des portions de ce faisceau lumineux vers les divers instruments de mesure de polarisation.

Les divers instruments de mesure de la polarisation permettent de préférence de :

- mesurer l'intensité de la composante du champ électrique de la lumière selon un premier axe x,
- mesurer l'intensité de la composante du champ électrique de la lumière selon un second axe y perpendiculaire au premier axe x,
- mesurer me déphasage entre la lumière selon son axe x et la lumière selon son axe y,
- et, de préférence, mesurer le déphasage entre la lumière selon son axe x', bissectrice de x et y et la lumière selon son axe y'.

La mesure de l'intensité de la lumière selon deux axes perpendiculaires se fait par exemple par la séparation de la lumière selon deux axes perpendiculaires par une lame ou un prisme biréfringent suivi de deux capteurs d'intensité lumineuse placés en sorties de ladite lame ou dudit prisme. La mesure du déphasage entre deux composantes perpendiculaires, se fait par exemple par la séparation de la lumière selon deux axes perpendiculaires par une lame ou un prisme biréfringent suivi, pour l'onde polarisée selon l'un des deux axes, d'une rotation de cet axe de polarisation de 90°, par exemple grâce à un matériau rotatif ou chiral ou par la succession de deux lames quart d'ondes, puis une projection conjointe à travers des fentes d'Young de ces deux ondes, dont l'une a subi la rotation de son champ électrique, sur un écran , les interférence des deux sources de lumière dessinant des franges dont les positions dépendent dudit déphasage.

### Amplificateur optique

On désigne par « amplificateur optique » un dispositif permettant de dupliquer un photon qui y est introduit, notamment, le deuxième photon d'une paire de photons intriqués, en conservant son état de polarisation.

De préférence, l'amplificateur optique est un amplificateur à fibre dopée.

On peut par exemple utiliser un amplificateur à Erbium (EDFA), par exemple de 4m de long, dans lequel le photon à amplifier est introduit en même temps qu'une onde amplificatrice de longueur d'onde plus courte, ce qui permet d'amplifier l'onde correspondant au photon introduit, avec des gains pouvant être de l'ordre de 37db/m.

On peut aussi utiliser un amplificateur à fibres dopées (DFA) utilisant un dopant différent de l'Erbium.

En variante, l'amplificateur optique est par exemple un amplificateur à cavité verticale (VCSOA), ou encore un amplificateur de type semi-conducteur (SOA).

### Couches anti-reflet

Pour éviter la perte de photons, on dispose de préférence des couches anti-reflet aux interfaces entre les milieux transparents adjacents d'indice différent traversés par les photons, ainsi qu'aux interfaces des prismes et lames biréfringentes traversées par des photons, la couche anti-reflet étant adaptée de préférence à ou aux indices du matériau et à ou aux angles d'incidences et directions de polarisation ainsi que à la longueur d'onde du photon qui doit le traverser.

### Filtres dichroïques

Le premier et/ou le deuxième récepteur comportent de préférence un ou plusieurs filtres dichroïques permettant de ne laisser passer que les photons d'une longueur d'onde donnée, notamment un prisme constitué d'un matériau transparent dispersif, le ou les filtres étant de préférence disposés devant le ou les instruments de mesure, ou devant le sélecteur optique pour le premier récepteur, et ce notamment si les indices de réfraction des matériaux non linéaires sont modifiés par application de flux lumineux puissants.

## Affectation des photons à l'information avec horloges synchronisées

Lorsque les photons arrivent au second récepteur, il est utile de pouvoir différencier s'ils doivent être affectés à l'information transmise, s'il s'agit d'une information transmise plusieurs fois ou encore s'il s'agit d'une information qui n'aurait pas été codée sur une paire de photons intriqués.

En effet, les émissions de photons sont parfois irrégulières, par exemple un émetteur de type SPDS tel que mentionné plus haut, peut émettre une double paire de photons sans que cela ne soit souhaité.

L'émetteur et chacun des récepteurs comportent de préférence une horloge, les horloges de l'émetteur et des récepteurs étant synchronisées entre elles.

Cela permet, lorsque combiné avec la connaissance du temps de voyage des photons entre l'émetteur et chacun des récepteurs de déterminer des périodes de codage et de réception, de préférence répétitives, pendant lesquelles un photon peut être codé au premier récepteur pour les périodes de codage et son photon intriqué arriver au second récepteur pendant les périodes de réception.

Si plusieurs photons sont reçus pendant une période de réception, le premier récepteur conserve un état inchangé jusqu'à un moment compris entre par exemple un quart du temps de non-émission après la fin la période de réception et la moitié du temps de non-émission $\delta t'$ avant la prochaine période de réception.

Le second récepteur enregistre de préférence les bits reçus pour chaque période de réception. Il transmet alors avantageusement au premier récepteur de temps en temps, notamment si le dispositif utilise la réflexion pour transmettre un bit ou un trit, par exemple tous les 3000 intervalles de réception, ou tous les 100 intervalles de réception sans photon, une liste des périodes de réception pour lesquelles il n'a pas reçu de de photon, le photon transmis ayant pu être perdu ou aucun photon n'ayant été émis par l'émetteur pour cette période, sans que le premier émetteur ne sache s'il a réfléchi de photons durant ces mêmes périodes, notamment si le dispositif ne dispose pas de détecteur de photons.

La transmission de cette liste peut se faire par communication instantanée utilisant le procédé selon l'invention décrit plus bas, ou par un moyen communication classique. A la réception de cette liste, le premier récepteur transmet alors les bits correspondant à ces périodes de transmission pour lesquelles aucun photon n'a atteint le second récepteur.

En variante, le premier récepteur n'utilise pour transmettre des informations que les deux instruments de mesure différents, l'un détectant les polarisations linéaires, l'autre les polarisations circulaires.

Le premier récepteur retransmet alors chaque bit en sélectionnant l'instrument de mesure approprié au bit qu'il veut transmettre pour cette période de transmission, et conserve de préférence le sélecteur dans le même état jusqu'à la fin de la période de transmission pour laquelle il reçoit un photon, lui permettant de sélectionner l'instrument de mesure à utiliser pour la transmission du bit suivant.

Le second récepteur, en recevant les photons pendant les périodes de transmission, et s'il en reçoit, mesure pour chaque période de transmission leur état de polarisation et en déduit le bit qu'il doit ajouter à la liste des bits reçus.

Si la ligne de transmission entre l'émetteur et le premier récepteur a une certaine opacité et peut absorber une certaine proportion des photons qui y transitent, certains photons peuvent arriver au deuxième récepteur pendant les périodes de réception avec des polarisations aléatoires.

Le second récepteur peut alors être configuré pour reconnaitre au moins une part des photons arrivant dans un état de polarisation qui ne peut être celui d'un photon intriqué absorbé ou réfléchi au premier récepteur.

### Décalage des horloges

De préférence, les horloges des composants du système, à savoir de l'émetteur et des deux récepteurs, sont configurées pour tenir compte du phénomène d'écoulement différent du temps en différents endroits, notamment des différentes altitudes de chacun des composants.

### Synchronisation des périodes de transmission entre récepteurs

On peut mettre en place un procédé permettant aux premier et second récepteurs de synchroniser leurs horloges.

Par exemple, lors de la mesure d'un premier photon, le premier récepteur note en utilisant sa propre horloge l'heure à laquelle ledit photon a heurté l'instrument de mesure.

L'heure notée est par la suite transmise au second récepteur ainsi que, de préférence, les références de l'intervalle de transmission, notamment l'heure de commencement et éventuellement la durée durant laquelle le photon a été attendu.

Le second récepteur note l'heure de réception du deuxième photon afin d'ajuster sa propre horloge pour que le décalage entre le début de la période de transmission et l'heure où le premier photon a heurté l'instrument de mesure du premier récepteur soit le même que le décalage entre le début de la période de réception du second photon au second récepteur avec l'heure donnée par l'horloge pour la réception du second photon.

Si les lignes de transmission entre l'émetteur et l'un ou l'autre des récepteurs absorbent certains photons, l'émetteur peut envoyer des photons en nombre prédéterminé, ou pendant une durée prédéterminée, et chacun des deux récepteurs peut noter l'heure moyenne de réception de chacun des photons puis un des récepteurs peut communiquer à l'autre récepteur cette dite heure moyenne ;

L'heure moyenne peut être calculée en faisant la moyenne des heures de réception de chacun des photons ou seulement du premier et du dernier photon reçu. Le nombre prédéterminé de photons envoyés ou la durée de leurs envois sont de préférence ajustés notamment en fonction du taux de transmission / perte de photons sur chacun des deux trajets entre l'émetteur et les récepteurs, et la fréquence moyenne d'envoi des photons.

Les durées de transit des photons entre l'émetteur et chacun des récepteurs étant différentes, la synchronisation des horloges entre chacun des récepteurs peut être différente suivant qu'il s'agisse de transmission des informations dans un sens ou dans l'autre. Chacun des récepteurs peut alors avoir un registre de synchronisation servant à incrémenter ou au contraire soustraire à l'heure de l'horloge dudit récepteur un lapse de temps ajusté lors de la synchronisation, pour en déduire l'heure d'une horloge synchronisée pour la réception d'informations en provenance de l'autre récepteur.

### Transmission entre émetteur et récepteur

On peut mettre en place un procédé permettant de synchroniser les périodes d'envoi des photons aux récepteurs et les périodes de réception aux récepteurs, ces périodes étant des intervalles de temps pendant lesquelles des photons peuvent quitter l'émetteur ou atteindre le récepteur.

A cette fin, l'émetteur peut émettre un premier signal lumineux bref suivi ou précédé d'autres signaux lumineux composant un message, de préférence signés par une signature digitale indiquant l'heure précise, à son horloge, de l'envoi du signal.

A réception dudit premier signal lumineux, le récepteur note l'heure de réception puis lit l'heure d'envoi du signal, fait la différence entre l'heure d'envoi du signal et l'heure du début de la période de transmission des photons, pendant laquelle le signal a été envoyé, ou si celui-ci a été envoyé en dehors d'une période de transmission, le début de la période de transmission précédente, et fait de même avec l'heure de réception du signal et l'heures du début de la période de réception.

Si la différence entre la date d'émission du signal et le début de la période de transmission est plus grande que la différence entre la date de réception et le début de la période de réception, le récepteur peut avancer le début de la période de transmission, ou l'inverse dans le cas contraire.

L'étalonnage est avantageusement répété plusieurs fois et les résultats sont moyennés, permettant alors d'ajuster les horloges avec une précision supérieure à l'imprécision des heures d'envoi et de réception desdits signaux lumineux.

La longueur d'onde utilisée pour le signal lumineux est de préférence la même que la longueur d'onde des photons intriqués, de façon à ce que celui-ci soit transmis à la même vitesse que les photons intriqués.

### Affectation des photons à l'information sans horloge synchronisée

En variante aux horloges synchronisées, le premier récepteur peut comporter des détecteurs-transmetteurs et un élément d'attente, par exemple un réflecteur agencé pour réfléchir le premier photon avec une polarisation prédéterminée différentes des polarisations détectables par les détecteurs transmetteurs, ou encore un élément agencé pour absorber le premier photon dans une polarisation prédéterminée différente des polarisations des détecteurs transmetteurs

Les polarisations des détecteurs-transmetteurs sont de préférence complémentaires de telle sorte que tout photon dirigé vers un élément d'attente absorbant est absorbé.

Les détecteurs-transmetteurs sont de préférence agencés pour détecter la polarisation des photons dans au moins quatre polarisations différentes, ces polarisations étant groupées en paires complémentaires de telle sorte que tout photon dirigé vers un détecteur-transmetteur est ainsi détecté et absorbé quelle que soit sa polarisation initiale.

Le ou les détecteurs-transmetteurs du premier récepteur sont utilisés pour envoyer les informations par choix de la paire de détecteurs utilisée.

Chaque photon reçu par le premier récepteur pendant une période prédéterminée, aussi désignée comme « période de repos », après la réception d'un photon ayant servi à un envoi d'information est envoyé vers l'élément d'attente, la durée de cette période prédéterminée étant de préférence fixée et de préférence supérieure à deux fois l'imprécision de l'horloge des récepteurs, et le commencement de cette période de repos étant déterminé par le ou l'un des deux capteurs absorbant le photon ayant été utilisés pour envoyer l'information.

Le second récepteur est de préférence agencé pour d'une part,

- ignorer les photons appairés à des photons envoyés vers l'élément d'attente, d'autre part,
- interpréter deux photons successifs non appairés à des photons envoyés vers l'élément d'attente comme des bits successifs si ceux-ci sont séparés d'au moins la période de repos auquel est soustrait l'imprécision de l'horloge des récepteurs, et enfin,
- interpréter deux photons reçus successivement dans un temps inférieur ou égal à par exemple les trois quart de la période de repos comme représentant un même bit.

Le second récepteur peut aussi détecter une erreur dans la transmission de l'information si : deux photons consécutifs de polarisations différentes non appairés à des photons envoyés vers l'élément d'attente sont reçus dans un temps inferieur à la période de repos moins l'imprécision de l'horloge des récepteurs.

Cette méthode présente l'avantage de ne pas nécessiter de placer un commutateur à l'émetteur pour restreindre les émissions de photons intriqués, ni de synchronisation d'horloge.

Le ou les détecteurs transmetteurs des premiers récepteurs peuvent aussi servir à la fois d'élément d'attente, notamment si la polarisation dans laquelle ils détectent les photons est ajustable et peut donc être ajustée sur la polarisation utilisée par l'élément d'attente pour absorber les photons.

Dispositif anti-bruit

Les amplificateurs optiques ont tendance à émettre des photons en sens inverse du signal de propagation, soit lors de l'amplification du signal, soit en absence de signal, après que des molécules ou des atomes du milieu amplificateur aient été excités par un signal pompe.

Le deuxième récepteur comporte par exemple un commutateur disposé devant l'amplificateur optique, afin de limiter le nombre de photons émis par l'amplificateur vers la source de photons intriqués du dispositif.

Le commutateur du second récepteur est par exemple configuré pour absorber ou réflechir le ou les photons subséquents à un premier photon atteignant ledit second récepteur dans un intervalle de temps prédéterminé.

Le commutateur du second récepteur peut être connecté à l'instrument de mesure du deuxième récepteur, afin de ne plus laisser passer la lumière dans un sens ou dans l'autre dès l'arrivée d'un premier photon et jusqu'à ce que le photon suivant soit attendu ou un temps prédéterminé avant ce moment, par exemple la moitié de la période de repos définie plus haut.

Alternativement, le commutateur du second récepteur peut ne laisser passer les photons que lors des périodes où ils sont attendus, notamment pendant les intervalles de temps de traitement des photons précités.

Affectation des photons à l'information sans horloge synchronisée utilisant des moyens de transmission optiques peu transparents

Les fibres optiques, quoique transparentes, ne transmettent pas tous les photons présentés à leur entrée. Une perte de 0.20db par kilomètres est courante, faisant par exemple perdre 10db en 50 km soit 90% des photons.

L'effet des photons perdus en transit entre l'émetteur et le premier récepteur est cependant différent de l'effet de la perte des photons perdus allant vers le second récepteur ; les photons intriqués des photons perdus entre l'émetteur et le premier récepteur pouvant arriver au second récepteur avec une polarisation quelconque correspondant à la polarisation du photon intriqué absorbé dans la ligne allant ers le premier récepteur , alors que la perte d'un photon dans la ligne conduisant au second récepteur ne fait que faire disparaitre un photon potentiellement porteur d'information c'est-à-dire dont le photon intriqué a atteint le premier récepteur.

De plus, les polarisations des photons arrivant au second récepteur après que leurs photons intriqués ont été absorbés en transit vers le premier récepteur ne sont pas nécessairement equi-reparties parmi toutes polarisations possibles observables.

On utilise donc de préférence pour la transmission d'information, des paires de polarisations complémentaires pour lesquelles des polarisations correspondantes observées au second récepteur sont les moins nombreuses lorsque le photon intriqué du photon détecté au second récepteur a été absorbé lors de son transit vers le premier récepteur.

Un procédé d'étalonnage d'un système de communication quantique, ne faisant pas partie de la présente invention, est décrit ci-après, ledit procédé permettant de déterminer deux matrices de Jones dont l'une d'elles permet de calculer la polarisation d'un photon arrivant au second récepteur en fonction de la polarisation d'un photon absorbé au premier récepteur, dans lequel, de préférence, la quantité de polarisations différentes observables au second récepteur est supérieure au double de l'inverse du taux de transmission de photons entre l'émetteur et le premier récepteur, le procédé consistant à :

- Configurer l'absorbeur complexe du premier récepteur pour absorber les photons reçus au premier récepteur dans l'une de deux polarisations complémentaires d'une paire de polarisation d'absorption,

- Générer successivement plusieurs paires de photons intriqués à partir d'un émetteur, le premier photon de la paire étant émis vers un premier récepteur et le deuxième photon de la paire étant émis simultanément vers un deuxième récepteur, les premier et deuxième photons étant intriqués selon leur état de polarisation,

- Compter pour chaque polarisation dans laquelle un photon est reçu au second récepteur le nombre de photons ayant atteint ledit second récepteur avec cette même polarisation,

- Arrêter d'envoyer des photons quand un nombre prédéterminé de photons est reçu au second récepteur,

- Déterminer les deux polarisations dans lesquelles les photons ont été reçus le plus souvent au second récepteur, ces polarisations étant considérées comme correspondant aux polarisations d'absorption des photons au premier récepteur,

-   Calculer les deux matrices de Jones possibles de transformation des polarisations permettant de déduire de la polarisation d'un photon reçu au premier récepteur, la polarisation d'un photon reçu au second récepteur.

L'enregistrement de la polarisation d'au moins un photon reçu aux premiers récepteur et de celle de son photon intriqué reçu au second récepteur, la correspondance étant faite par exemple grâce à leurs heures respectives de réception permet par ailleurs de pouvoir choisir parmi les deux matrices de Jones calculées, la quelle permet de calculer la polarisation des photons reçus au second récepteur en fonction de la polarisation de leurs photons intriqués éventuellement reçu au premier récepteur.

On peut encore utiliser le procédé suivant pour transmettre des informations du premier au deuxième récepteur, procédé comportant les étapes consistant à :

-   Générer successivement plusieurs paires de photons intriqués à partir d'un émetteur, le premier photon de la paire étant émis vers un premier récepteur et le deuxième photon de la paire étant émis simultanément vers un deuxième récepteur, les premier et deuxième photons étant intriqués selon leur état de polarisation,

-   Pour chaque information devant être transmise, configurer l'absorbeur complexe du premier récepteur pour absorber un nombre **NPT** de photons de transmission dans une paire de polarisations complémentaires prédéterminée appelée «paire de polarisation d'absorption » correspondant à l'information devant être transmise, puis, si l'information suivante devant être transmise n'est pas déjà connue ou est la même que l'information venant d'être transmise, configurer l'absorbeur dans une paire de polarisations appelée «paire de polarisations d'attente », et , si ladite information est la même que l'information qui vient d'être transmise, compter au moins NPT photons absorbés dans cette « paire de polarisations d'attente » .

-   Au deuxième récepteur, compter pour chaque paire de polarisations complémentaires le nombre de photons reçus dans l'une des deux polarisations des dites paires de polarisation depuis l'éventuelle dernière réception d'un signal. Dès que ce compteur dépasse pour l'une des paires un nombre seuil **NSP** prédéterminé et que la paire de polarisations complémentaires est différente de celle du dernier signal reçu, considérer l'information correspondant à cette paire de polarisations comme un nouveau signal, et si cette dernière information ne correspond pas à la paire de polarisation d'attente, ajouter cette information à la liste des informations reçues.

Alternativement, au premier récepteur, l'absorbeur de polarisation est systématiquement configuré pour absorber au moins NPT photons dans l'une des deux polarisations d'attente après l'envoi de toute information.

Par exemple, pour transmettre une information, on utilisera :

•   des lignes de transmission entre l'émetteur et chacun des récepteurs présentant une atténuation de 10db soit une perte de 90% des photons.
•   des lignes de transmission entre l'absorbeur complexe configurées pour absorber les photons dans 450 paires de polarisations complémentaires, ces paires représentant 80% des photons reçus au second récepteur lors d'une absorption de leurs photons intriqués dans leurs transits vers le premier récepteur,
•   on peut choisir pour NPT=200 photons et 6 pour NSP ce qui permet d'obtenir, selon les calculs de l'inventeur, un taux d'erreur de transmission serait alors inférieur à 1 pour 10,000.

Dans un autre exemple, avec un taux d'erreur de 97% correspondant à une atténuation du signal de 15db, en utilisant 450 paires de polarisations complémentaires, chaque polarisation et déphasage étant écarté l'un de l'autre d'environ 5°, le codage de 1200 photons au premier récepteur (donc NPT=1200) et le nombre seuil NSP étant fixé à 14 permet d'obtenir, selon les calculs de l'inventeur, un taux d'erreur inférieur à 1 pour 150,000 si les photons résultant au second récepteur de photons absorbés lors de leurs transits vers le premier récepteur sont équirépartis sur toutes les polarisations observables.

## Traitement des paires de photons envoyées simultanément

L'émetteur peut parfois envoyer des paires de photons intriqués très proches les unes des autres. Les détecteurs de photons situés au premier récepteur comptent donc, de préférence, le nombre de photons absorbés et non, seulement le nombre d'impacts de photons sur ledit premier récepteur. Ce comptage peut par exemple tenir compte de l'intensité de l'onde électromagnétique heurtant les détecteurs de photons.

Des groupes de photons peuvent arriver aussi presque simultanément au second récepteur, celui-ci ne pouvant discriminer les polarisations des photons les unes des autres. Le détecteur de polarisation pouvant détecter une polarisation moyenne de tous les photons détectés 'simultanément', la polarisation des groupes de photons arrivant simultanément au second récepteur, c'est à dire dont l'intensité lumineuse générée est par exemple supérieure de 50% à l'intensité généré par un seul photon, ne donne avantageusement pas lieu à l'incrémentation des compteurs de photons reçus dans diverse polarisation. Il se peut cependant parfois que plusieurs photons atteignent le premier récepteur mais qu'un seul de leurs photons intriqués atteigne le second récepteur et celui-ci est alors compté.

### Performance du dispositif

L'utilisation de lignes sans perte ou avec peu de pertes entre l'émetteur et le premier récepteur, laissant par exemple transiter les photons dans le vide permet de réduire, ou d'éviter les photons reçus au deuxième récepteur avec une polarisation aléatoire.

De même l'utilisation au second récepteur d'instruments de mesure précis permettant soit d'augmenter le nombre de paires de polarisations complémentaires, soit d'ignorer un grand nombre de photons aux polarisations aléatoires peut permettre :

- d'augmenter la distance de transmission des photons,
- d'augmenter le débit en diminuant le nombre de photons de transmission NPT.

Une rapidité accrue de commutation de la polarisation de l'absorbeur complexe du premier récepteur permet d'augmenter la fréquence d'envois des photons intriqués envoyés par l'émetteur.

Une précision temporelle accrue des détecteurs de polarisation du second récepteur qui permet de discerner les parasitions de divers photons reçus très rapprochés dans le temps les uns des autres permet aussi l'utilisation d'un flux plus grand de photons intriqués, mais aussi de diminuer le nombre de réceptions de photons reçus 'simultanément' comme décrit plus haut.

Cette méthode présente l'avantage de ne pas nécessiter de placer un commutateur à l'émetteur pour restreindre les émissions de photons intriqués, ni de synchronisation d'horloge.

### Traitement du retour des photons vers l'émetteur

Des photons sont parfois réfléchis vers l'émetteur depuis les récepteurs. Pour éviter qu'ils soient à nouveau réfléchis par l'émetteur vers l'un des récepteurs, la cavité ou le matériau dans lequel sont produits les photons intriqués par mélange d'ondes, dont l'indice de réfraction est non linéaire, est de préférence entourée ou recouverte d'un matériau absorbant la lumière de longueur d'onde égale à celle des photons intriqués.

### Procédés de communication quantique

Un procédé de communication quantique, ne faisant pas partie de la présente invention, utilisant le système selon le premier aspect, comporte les étapes consistant à :

- Générer une paire de photons intriqués à partir d'un émetteur, le premier photon de la paire étant émis vers un premier récepteur et le deuxième photon de la paire étant émis simultanément vers un deuxième récepteur, les premier et deuxième photons étant intriqués, le deuxième récepteur étant situé sur le chemin de propagation du deuxième photon plus loin de l'émetteur que le premier récepteur, de telle sorte qu'il y arrive après,
- Modifier, grâce à un modificateur de polarisation, l'état de polarisation du premier photon lorsqu'il atteint le premier récepteur en un état de polarisation dépendant de l'information à transmettre, l'état étant choisi parmi au moins deux paires différentes de polarisations d'absorption complémentaires, à l'exception d'exactement deux paires de polarisations linéaires perpendiculaires dont les directions de polarisation de l'une des paires sont à 45° des directions de polarisation de l'autre paire,
- Absorber, grâce à un instrument d'absorption, le premier photon dans l'une des deux polarisations complémentaires de la paire choisie,
- Au second récepteur, dupliquer le deuxième photon en un flux de photons démultipliés grâce à un dispositif d'amplification, la lumière ainsi créée ayant conservé l'état de polarisation du deuxième photon,
- Mesurer l'état de polarisation moyen du flux de lumière et déterminer selon cette mesure l'état de polarisation du premier photon, afin d'en déduire l'information transmise par le premier récepteur.

La paire de polarisations complémentaires est de préférence choisie parmi au moins trois paires différentes de polarisations complémentaires.

La paire de polarisations complémentaires est par exemple choisie parmi 210 paires distinctes de polarisations d'absorption, notamment parmi des polarisations espacées de 9° dans leur direction de polarisation et déphasées de 9°.

L'invention a encore pour objet un procédé de communication quantique utilisant le système selon la présente invention, comportant les étapes consistant à :

- Générer une paire de photons intriqués à partir d'un émetteur, le premier photon de la paire étant émis vers un premier récepteur et le deuxième photon de la paire étant émis simultanément vers un deuxième récepteur, les premier et deuxième photons étant intriqués, le deuxième récepteur étant situé sur le chemin de propagation du deuxième photon plus loin de l'émetteur que le premier récepteur, de telle sorte qu'il y arrive après,
- Choisir, selon l'information à transmettre, d'absorber ou non le premier photon dans l'une de deux paires de polarisation complémentaires lorsqu'il atteint le premier récepteur grâce à un sélecteur optique dirigeant, ou non, ledit photon vers un ou vers l'un de plusieurs instruments,

- Dans le cas où il est choisi de ne pas absorber le photon dans une polarisation prédéfinie, piéger ledit premier photon dans un dispositif de protection permettant d'éviter son absorption au moins tant que le deuxième photon n'a pas atteint le deuxième récepteur,

- Au second récepteur, dupliquer le deuxième photon en un flux de photons démultipliés grâce à un dispositif d'amplification, chaque photon démultiplié ayant conservé l'état quantique du deuxième photon,

- Mesurer l'état quantique moyen du flux de photons démultipliés et déterminer selon cette mesure si le premier photon a été absorbé au premier récepteur, et/ou avec quel instrument, afin d'en déduire l'information transmise par le premier récepteur.

De préférence, la polarisation de la paire de photons intriqués est indéterminée dans la ou ou les bases observables dans laquelle ou lesquelles les instruments du premier récepteur les absorbent.

La paire de photons intriqués atteint par exemple les récepteurs avec une polarisation intriquée linéaire, l'une des deux polarisations complémentaires d'absorption étant circulaire, le deuxième récepteur étant agencé pour distinguer si la polarisation moyenne du flux de photons démultipliés est circulaire ou linéaire, et déterminer selon cette distinction si le premier photon a été mesuré ou non.

En variante, la paire de photons intriqués atteint les récepteurs avec une polarisation intriquée circulaire, l'état quantique mesuré au premier récepteur étant une polarisation linéaire, le deuxième récepteur étant agencé pour distinguer si la polarisation moyenne du flux de photons démultipliés est circulaire ou linéaire, et déterminer selon cette distinction si le premier photon a été mesuré ou non.

En variante, la paire de photons intriqués atteint les récepteurs avec une polarisation linéaire verticale ou horizontale, l'état quantique mesuré au premier récepteur étant une polarisation linéaire à 45° ou -45° de la verticale ou de l'horizontale, le deuxième récepteur étant agencé pour distinguer si la polarisation linéaire moyenne du flux de photons démultipliés (P20) est à 45 ou -45°, ou bien la verticale ou l'horizontale, et déterminer selon cette distinction si le premier photon a été mesuré ou non.

### Transmission d'information

Le système selon l'invention et le procédé de communication quantique décrit plus haut permet de transmettre entre le premier et le deuxième récepteur des informations soit de type binaire, sous forme de bits, soit des valeurs discrètes ou continues.

De préférence, plusieurs paires de photons intriqués sont générées successivement par l'émetteur, chaque paire de photons permettant la transmission d'une information, par exemple de type binaire, du premier récepteur au deuxième récepteur.

On peut par exemple choisir d'absorber le premier photon au premier récepteur pour transmettre un bit 1 et de le réfléchir pour transmettre un bit 0. La mesure au second récepteur de l'état quantique moyen du flux de photons démultipliés permet alors de déterminer si un bit 1 ou un bit 0 est transmis depuis le premier récepteur de manière quasi-instantanée.

Plusieurs procédés peuvent être mis en place afin de sécuriser la communication et éviter des erreurs de transmission, dues par exemples à des doubles paires de photons émises simultanément.

Par exemple, durant des intervalles de temps préalablement établis grâce aux horloges décrites plus haut, seul le premier photon atteignant un récepteur est de préférence considéré, les photons suivants étant ignorés.

Comme décrit plus haut, les photons peuvent être comptés lorsqu'ils arrivent à un détecteur de polarisation. Si le comptage révèle l'arrivée de plus d'un photon durant un intervalle de temps prédéfini, le bit n'est pas transmis durant cet intervalle, et est par exemple transmis dans l'intervalle de temps suivant, ou , de préférence le même bit est retransmis à nouveau.

Au deuxième récepteur, le comptage des photons arrivant dans l'intervalle de temps où ils sont attendus peut avantageusement permettre de créer une liste temporaire de bits non reçus.

### Communication bidirectionnelle

Pour permettre une communication bidirectionnelle, c'est-à-dire pour permettre à chacun des deux récepteurs de transmettre des informations à l'autre récepteur, on peut utiliser plusieurs émetteurs.

Le système selon l'invention peut notamment comporter un deuxième émetteur pouvant générer une ou plusieurs paires de photons intriqués, le deuxième émetteur étant situé plus proche du deuxième récepteur que du premier récepteur.

En variante, on peut faire parcourir un chemin indirect à au moins une partie des photons de manière à en rallonger le temps de transport vers l'un des récepteurs, par exemple en faisant se réfléchir les photons sur un ou des miroirs intermédiaires, ou les faisant traverser des milieux d'indice de réfraction élevés, ou encore en les transportant dans des fibres optiques de longueur variées.

Ce parcours allongé peut par exemple alterner à cadence fixe ou variable en fonction de des besoins, avec le parcours non allongé de façon à pouvoir utiliser les photons intriqués parfois pour transmettre l'information d'un point à un autre, parfois dans l'autre sens. Des commutateurs optiques en amont des récepteurs et synchronisés avec le commutateur apposé à l'émetteur pouvant envoyer les photons sur un chemin rallongé, peuvent être installés pour envoyer lesdits photons vers des récepteurs de type premier récepteur tel que décrit plus haut, ou au contraire de type second récepteur.

Procédé de transmission de clé et de vérification de la non-écoute de cette transmission On peut vérifier la non-écoute d'une information transmise par un flux de photons de l'émetteur au deuxième récepteur en mettant en œuvre les étapes suivantes :

- le deuxième récepteur établit une première liste des dates de réception des photons ayant véhiculé l'information ainsi que la polarisation relative désignant celle des deux polarisations complémentaires dans laquelle chaque photon a été reçu ;
- le deuxième récepteur génère un message comportant la liste collectée à l'étape précédente, crée une signature électronique de cette liste et transmet ladite liste ainsi que la signature au récepteur ;
- le premier récepteur reçoit la liste et la signature puis vérifie ladite signature ;
- le premier récepteur fait une seconde liste constituée des éléments de la première liste dont les polarisations relatives des photons reçus par les premier et deuxième récepteurs sont égales, ou bien dont le photon intriqué n'a jamais atteint le premier récepteur ; deux photons intriqués ayant des polarisations relatives différentes ;
- si le nombre d'éléments de la seconde liste restreinte aux couples de photons intriqués dont chacun des deux photons ont atteint leurs récepteurs respectifs est inférieur au produit d'un ratio prédéterminé par le décompte des éléments de la première liste restreinte aux couples de photons intriqués dont chacun des deux photons ont atteint leurs récepteurs respectifs, alors l'information est déclarée avoir été transmise non écoutée.

On peut ensuite avoir les étapes suivantes :

- si l'information est déclarée avoir été transmise non écoutée, alors la seconde liste est envoyée signée par le premier récepteur au second récepteur, puis une troisième liste est créée par le premier récepteur, constituée des polarisations relatives des photons figurant dans la première liste et ne figurant pas dans la seconde liste,
- à réception de la deuxième liste par le deuxième récepteur et après vérification de la signature, la troisième liste est recréée dans le deuxième récepteur à l'aide de la première et de la deuxième liste, puis un message signé, confirmant la bonne réception de la seconde liste, est envoyée par le deuxième récepteur au premier récepteur ; et
- le deuxième récepteur utilise la troisième liste comme clé partagée avec le premier récepteur ; dès réception par le premier récepteur du message transmis par le deuxième récepteur à l'étape précédente, le premier récepteur utilise la troisième liste comme clé partagée dans des échanges avec le deuxième récepteur.

Un filtre polarisant peut être disposé en amont du deuxième récepteur.

**Brève description des dessins**

L'invention pourra être mieux comprise à la lecture de la description détaillée qui va suivre, d'exemples de mise en œuvre non limitatifs de celle-ci, et à l'examen du dessin annexé, sur lequel :

[Fig 1A] représente de manière partielle et schématique un système de communication quantique selon le premier aspect, ne faisant pas partie de l'invention,
[Fig 1B] représente de manière partielle et schématique un système de communication quantique selon l'invention,
[Fig 2A] représente de manière partielle et schématique un photon polarisé linéairement,
[Fig 2B] représente de manière partielle et schématique un photon polarisé circulairement,
[Fig 3] la figure 3 représente de manière schématique des détails de transmission des photons de l'émetteur aux récepteurs,
[Fig 4A] représente de manière partielle et schématique un exemple de sélecteur optique selon l'invention,
[Fig 4B] représente de manière partielle et schématique une variante du sélecteur de la figure 4A,
[Fig 4C] représente de manière partielle et schématique un autre exemple de sélecteur optique selon l'invention,
[Fig 5A] [Fig 5B] la figure 5A et la figure 5B représentent de manière schématique un exemple de modificateur de direction de polarisation comportant des lames quart d'onde,
[Fig 5C] la figure 5B représente de manière schématique un autre exemple de modificateur de direction de polarisation comportant un matériau chiral,
[Fig 6] la figure 6 représente de manière schématique un exemple de modificateur de phase de polarisation,
[Fig 7] représente de manière partielle et schématique un exemple d'instrument d'absorption d'un photon polarisé linéairement,
[Fig 8] représente de manière partielle et schématique un autre exemple d'instrument d'absorption d'un photon polarisé linéairement,
[Fig 9] représente de manière partielle et schématique un exemple de récepteur du deuxième photon comportant un amplificateur à fibres dopées,
[Fig 10A] représente de manière partielle et schématique un exemple d'instrument de mesure du deuxième récepteur comportant une succession de lames semi-réfléchissantes,

[Fig 10B] représente de manière partielle et schématique un exemple d'interféromètre de Young utilisé pour l'instrument de mesure du deuxième récepteur,

[Fig 11A] est un schéma en blocs illustrant de manière partielle un exemple de fonctionnement d'un système de communication quantique pour transmettre un bit 0,

[Fig 11B] est un schéma en blocs illustrant de manière partielle un exemple de fonctionnement d'un système de communication quantique pour transmettre un bit 1,

[Fig 12] est un schéma en blocs illustrant de manière partielle un exemple de fonctionnement d'un système de communication quantique pour transmettre une série de valeurs discrètes,

[Fig 13] est un schéma en blocs illustrant de manière partielle un exemple de procédé d'horodatage de l'arrivée d'un photon dans un récepteur,

[Fig 14] illustre de manière partielle et schématique la possibilité de placer un dispositif « anti-bruit » devant l'amplificateur,

[Fig 15] représente de manière partielle et schématique la possibilité d'utiliser le système selon l'invention pour établir une communication bidirectionnelle entre deux endroits, et

[Fig 16] illustre une variante de mise en œuvre du premier aspect.

**Description détaillée**

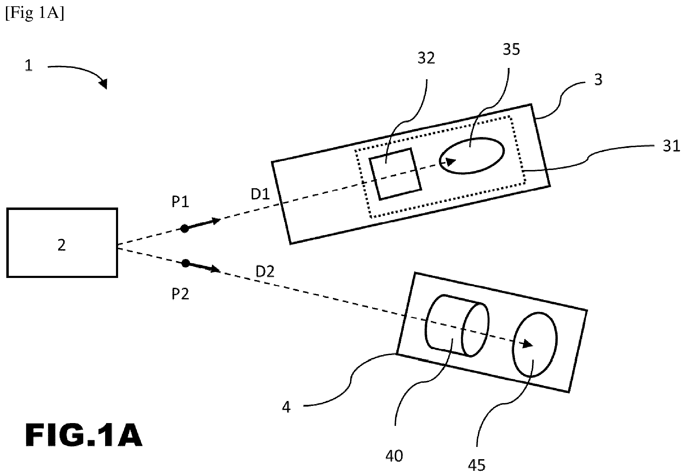

On a illustré à la figure 1A un système de communication quantique 1 selon le premier aspect, ne faisant pas partie de la présente invention. Le système comporte un émetteur 2 émettant une paire de photons intriqués (P1, P2), le premier photon P1 se propageant sur un chemin de propagation D1 et le deuxième photon D2 se propageant un chemin de propagation D2 différent du chemin D1. Les photons P1 et P2 sont émis simultanément.

De par la nature de la lumière et la dualité onde-corpuscule du photon, les termes « onde », « photon » et « particule » sont utilisés indifféremment dans la suite pour désigner le produit émis par l'émetteur 2.

Les termes « instrument de mesure » et « instrument d'absorption » sont utilisés indifféremment pour désigner un instrument absorbant un photon selon une certaine polarisation.

Le système 1 comporte un premier récepteur 3, situé sur le chemin de propagation D1 du premier photon P1, et un deuxième récepteur 4, situé sur le chemin de propagation D2 du deuxième photon P2.

Le récepteur 3 est plus proche de l'émetteur 2 que le récepteur 4, de manière à ce que le photon P1 l'atteigne avant que le photon P2 n'atteigne le récepteur 4.

Dans l'exemple considéré, le récepteur 3 comporte un absorbeur complexe 31 comportant un modificateur de polarisation 32 et un instrument d'absorption 35.

L'absorbeur complexe 31 est configuré pour absorber le photon dans un état de polarisation choisi parmi plusieurs paires de polarisations complémentaires différentes, de préférence au moins trois paires.

Le modificateur de polarisation 31 est configuré pour transmettre le photon P1 selon la paire de polarisations complémentaires choisie et l'instrument d'absorption 35 permet de déterminer dans lequel des deux états de la paire est le photon P1. Avant d'entrer dans l'instrument d'absorption 35, l'état de polarisation du photon P1 est une superposition des deux états de la paire choisie, pondéré par certaines probabilités, par exemple de manière équiprobable.

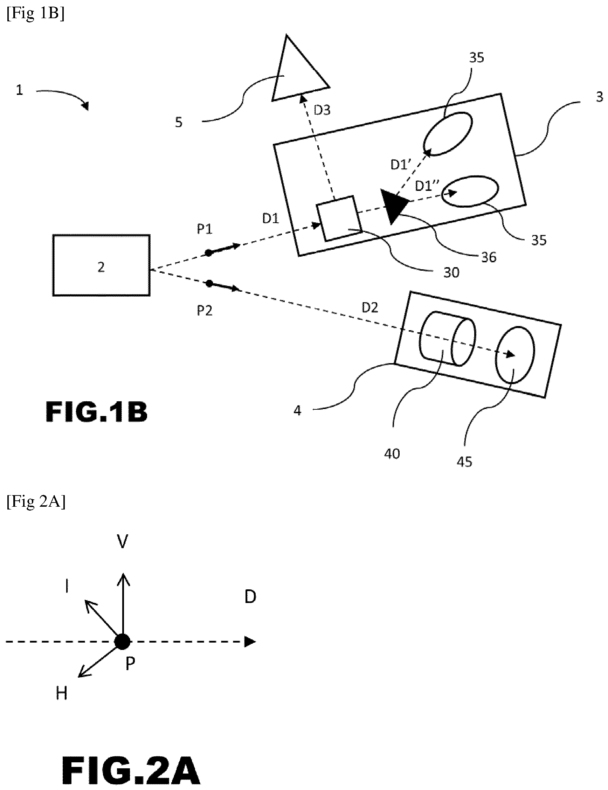

On a illustré à la figure 1B un exemple de système de communication quantique 1 selon l'invention. Dans cet exemple, le récepteur 3 comporte deux instruments de mesure 35 agencés pour mesurer l'état quantique du premier photon P1, et un sélecteur optique 30 disposé en amont des instruments de mesure 35 et configuré pour envoyer le premier photon P1 soit vers un prisme biréfringent 36 qui mène le photon, selon la direction linéaire de sa polarisation sur les chemins D1' ou D1" puis vers l'un ou l'autre des instruments de mesure 35, soit l'empêche d'être mesuré, par exemple en le réfléchissant sur un chemin de propagation D3 différent du chemin D1.

La direction D3 est notamment choisie de façon à ce que le photon P1 ne soit pas absorbé avant que son photon intriqué ne soit démultiplié au second récepteur 4.

Le système 1 comporte de préférence, comme illustré, un dispositif 5 de protection de l'état quantique d'un photon disposé à proximité du récepteur 3, notamment sur le chemin de propagation D3 dans l'exemple considéré.

Ce dispositif permet par exemple de « piéger » le photon P1 dans le cas où il est réfléchi par le sélecteur optique 30 sur le chemin D3, afin par exemple d'éviter qu'il ne soit mesuré ou absorbé au moins jusqu'à ce que le deuxième photon P2 ait atteint le deuxième récepteur 4. Un détecteur de photon 5-D (non représenté) peut être placé à l'extrémité du dispositif 5 pour détecter les photons qui y ont été capturés , après que leurs photons intriqués aient atteint le second récepteur.

Le deuxième récepteur 4 comporte un amplificateur optique 40 permettant de démultiplier le deuxième photon P2 en conservant sa polarisation et un instrument de mesure 45 permettant de mesurer la polarisation moyenne des photons démultipliés.

La transmission des photons P1 et P2 peut se faire de différentes façons, et dans différents milieux. Les photons se propagent par exemple dans une fibre optique ou un guide d'onde, ou encore librement dans l'espace, l'espace étant vide ou rempli de gaz.

Les photons peuvent traverser plusieurs milieux, présentant des indices de réfractions différent.

On peut par exemple insérer des lames anti-reflets entre deux milieux traversés, le cas échéant, afin d'éviter des phénomènes optiques non désirés, notamment la réflexion de Fresnel des ondes émises par l'émetteur 2.

L'émetteur 2 comporte par exemple une ou des lentilles choisies de taille suffisante pour que les photons atteignent leur récepteur respectif avec une faible diffraction, par exemple permettant qu'au moins 99.99% de l'onde émise atteigne le récepteur.

L'émetteur 2 peut de plus comporter un système, notamment un dispositif électronique, permettant d'ajuster les directions initiales dans lesquelles les photons P1 et P2 sont respectivement émis.

Cet ajustement peut par exemple tenir compte des différents indices de réfractions des milieux traversés, et de la modification de la trajectoire des photons qui peuvent en résulter, par exemple pour un photon émis depuis l'espace qui entre dans l'atmosphère.

La longueur d'onde de l'onde émise est par exemple choisie selon le ou les milieux à traverser ; on utilisera par exemple de préférence des photons dans le domaine de l'infrarouge quand ceux-ci doivent transiter par l'atmosphère ou l'air.

L'émetteur 2 génère par exemple des paires de photons intriqués grâce à la méthode de conversion paramétrique spontanée (SPDC). L'émetteur 2 est par exemple configuré pour émettre en moyenne moins une paire par unité de temps, par exemple une paire par nano seconde, ce qui correspond à une fréquence de transmission de photons de 1GHz.

Lorsqu'ils sont émis, les photons P sont par exemple polarisés rectilignement, c'est-à-dire que l'onde électromagnétique correspondante a un champ électrique dont la direction est perpendiculaire à leur direction de propagation D. Le cas échéant, la polarisation des photons peut être verticale V ou horizontale H, comme illustré à la figure 2A.

L'état quantique correspondant à la polarisation des photons est parfois indéterminé tant qu'il n'a pas été mesuré ou absorbé. Avant d'être mesuré, l'état quantique du photon est donc parfois considéré comme la superposition des états possibles, à savoir, dans l'exemple considéré, comme une la superposition d'une polarisation à un angle de 45° et d'une polarisation à un angle de -45°.

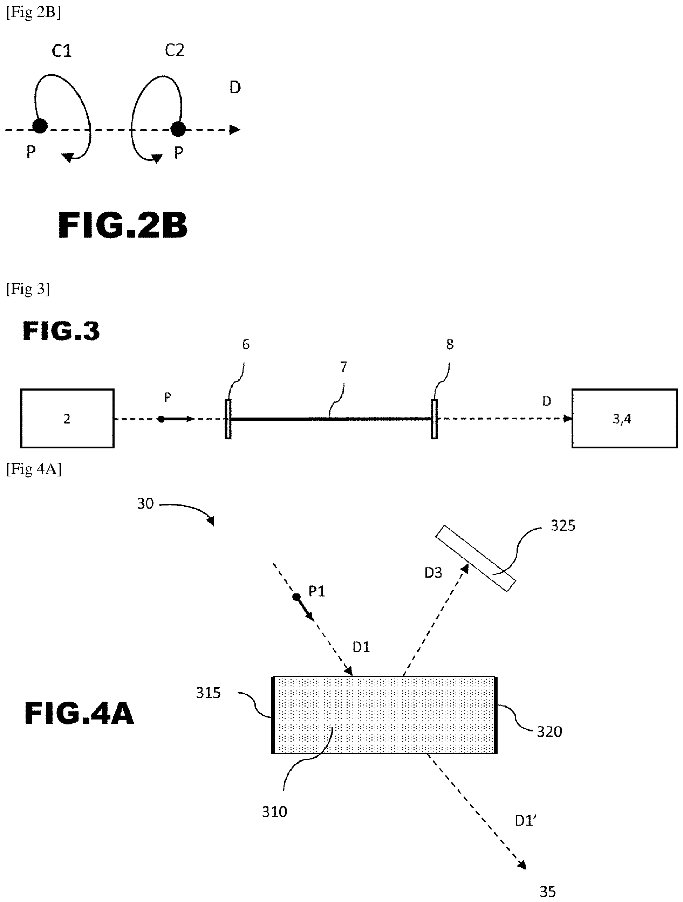

Dans la variante illustrée à la figure 2B, les photons P lorsqu'ils sont émis sont polarisés circulairement, c'est-à-dire que la direction du champ électrique correspondant change selon un mouvement de rotation, alors que sa norme reste constante.

Le cas échéant, la polarisation des photons est définie par le sens de rotation du champ électrique, soit un sens horaire C1 ou anti horaire C2. Avant d'être mesurés, les photons polarisés rectilignement sont dans un état quantique indéterminé, considéré comme la superposition de deux états de polarisation circulaires de sens de rotation opposées.

Dans certains cas, on peut introduire sur les chemins de propagation des photons, entre l'émetteur 2 et les récepteurs 3 et/ou 4, deux lames quart d'onde 6 et 8, tel qu'illustré à la figure 3.

La lame 6, selon son orientation, transforme par exemple la polarisation rectiligne d'un photon en polarisation circulaire en avançant ou en retardant les ondes électromagnétiques se propageant selon un axe perpendiculaire à l'axe ordinaire du cristal avec un champ électrique perpendiculaire au même axe par rapport aux onde ayant un champ électrique parallèle audit axe ordinaire.

Les photons émergeant de la lame 6 sont par exemple transmis par une fibre optique 7 vers une autre lame quart d'onde qui convertit les champs polarisés circulairement en champs polarisés rectilignement, avant de se propager vers les récepteurs 3 ou 4.

Cette transformation de la polarisation des photons émis permet notamment de ne pas avoir à prendre en considération au niveau des récepteurs la direction de la polarisation des photons émis par l'émetteur.

Le sélecteur optique 30 peut être réalisé de différentes façons, dont certains exemples sont illustrés aux figures 4A à 4D.

Le sélecteur optique 30 comporte par exemple un miroir contrôlé à cristaux liquides tel qu'illustré à la figure 4A, comportant une lame 310 enfermant des cristaux liquides. On place par exemple des électrodes 315 et 320 sur des côtés opposés de la lame 310 afin de soumettre les cristaux liquides à un champ électrique, permettant d'en contrôler son indice de réfraction $n_C$.

Selon l'indice de réfraction $n_C$, le photon incident P1 peut être réfléchi sur un chemin de propagation D3, ou bien il peut traverser la lame 310 et être transmis sur un chemin de propagation D1', qui peut être identique ou différent du chemin D1, vers l'instrument de mesure 35.

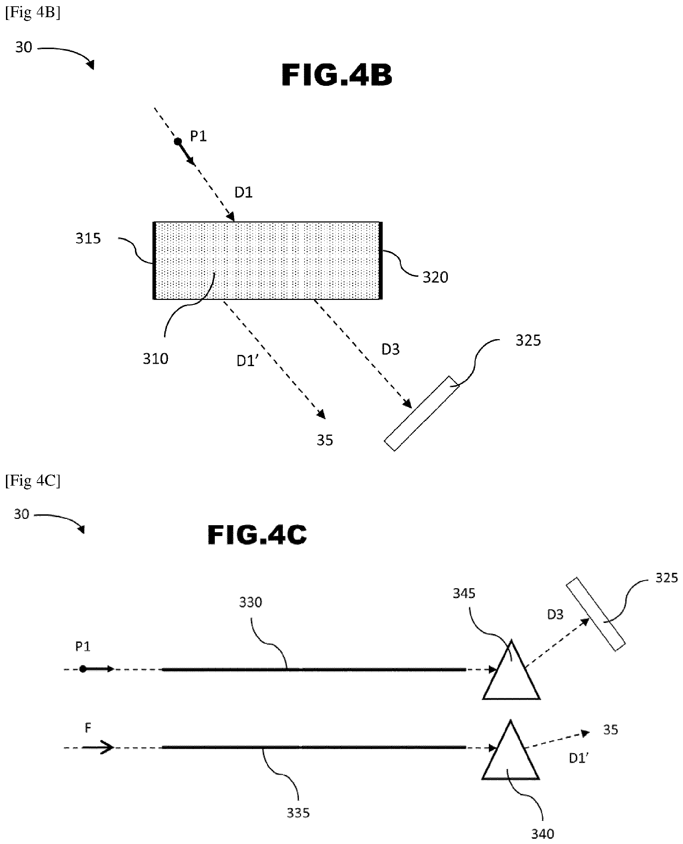

Dans une variante illustrée à la figure 4B, le photon P1 traverse la lame en cristaux liquide 310 et ressort selon D3 ou D1', les directions D1, D1' et D3 étant, dans l'exemple considéré, parallèles.

Un miroir 325, notamment un miroir de Bragg, peut être placé sur l'axe de propagation D3 afin de réfléchir le photon dans une autre direction, par exemple vers le dispositif de protection 5

Des lames anti-reflet peuvent avantageusement être placées sur chacune des faces de la lame 310 et ajustées selon les angles de d'entrée et de sortie du photon quand celui-ci le traverse.

Dans la variante illustrée à la figure 4C, le sélecteur optique 30 est un miroir contrôlé par fibres non linéaires. Il comporte deux fibres optiques 330 et 335. La fibre 335 est par exemple formée d'un matériau non linéaire.

Le premier photon P1, à son arrivée au premier récepteur, entre dans la fibre 330. On peut choisir d'illuminer simultanément la fibre 335 avec un signal lumineux F, aussi appelé « signal contrôle ».

Le signal F est une onde lumineuse de forte intensité, par exemple émise par un laser, et de longueur d'onde différente de celle du photon P1.

Si la fibre 335 est illuminée par le signal F, le photon P1 reste dans la fibre 330 avant de par exemple traverser en sortie de fibre un prisme 345 disposé sur un chemin de propagation D3. Similairement à ce qui a été décrit plus haut, un miroir 325, notamment un miroir de Bragg, peut être placé sur l'axe de propagation D3 afin de réfléchir le photon dans une direction souhaitée, par exemple vers le dispositif de protection 5 ou , de façon droite de retour dans la fibre 330 .

Si la fibre 335 n'est pas illuminée par le signal F, le photon P1 est transmis de la fibre 330 à la fibre 335. Le photon P1 ressort de la fibre 335 et traverse par exemple un prisme 340 avant d'être transmis par exemple vers l'instrument de mesure 35. Le prisme 340 est de préférence constitué d'un matériau dispersif permettant de faire ressortir la lumière d'illumination par un endroit différent et dans une direction différente de celle du photon. Un miroir de Bragg (non représenté) ne renvoyant que ladite lumière d'illumination et laissant passer le photon peut être placé entre la fibre 335 et le prisme 340, par exemple pour réfléchir ladite lumière d'illumination dans une autre direction que vers le prisme 340 ou même dans la fibre.

Des lames anti-reflet (non représentées) peuvent être placées en entrée et sortie des prismes 340 et 345 et ajustées à la longueur d'onde du photon P1.

On va maintenant décrire diverses façons de réaliser le modificateur de polarisation 32 du système de la figure 1A.

Le modificateur de polarisation 32 comporte de préférence un modificateur de direction de polarisation 32a disposé en amont d'un modificateur de phase 32b.

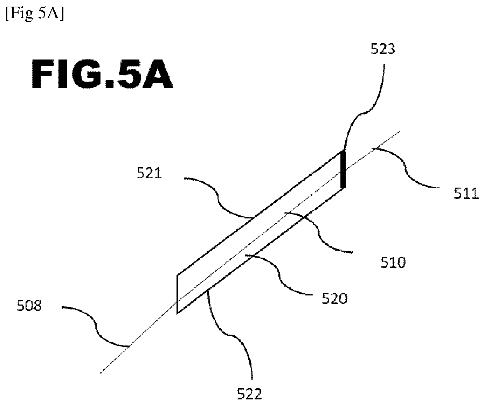

Dans un premier exemple de réalisation de modification de direction de polarisation, le modificateur de direction de polarisation 32a comporte un empilement de lames 510, notamment des lames quartes d'onde, orientées différemment les unes par rapport aux autres, comme illustré à la figure 5A de telle sorte qu'une onde circulaire 508 pénétrant l'une de ces lames quartes d'onde ressorte en une onde 511 polarisée linéairement selon une direction associée à ladite lame.

Ces lames peuvent être conçues pour fonctionner avec des ondes 508 les pénétrant avec une direction parallèle à la bissectrice de leurs arrêtes 521 et 522. Ces lames sont de préférence composées de cristaux biréfringents uniaxes tels que par exemple du rutile. Ce cristal biréfringent peut composer toute leur masse ou bien être concentré sur une tranche par exemple sur l'une des arrêtes 523 traversées par l'onde 508, comme illustré à la figure 5A.

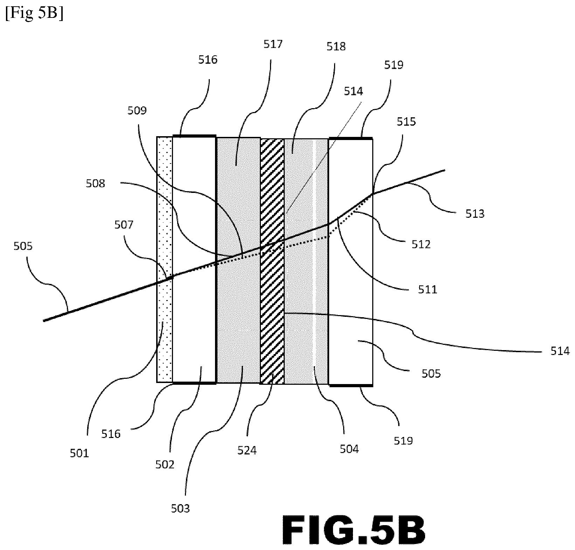

Ces lames peuvent être juxtaposées les unes aux autres pour former une structure 524, comme illustré à la figure 5B, de telle sorte que les ondes sortantes 511 ou 512 aient une polarisation linéaire dont la direction du champ électrique dépend du lieu de pénétration dans l'assemblage 524 de deux ondes 508 ou 509 polarisées circulairement et de direction parallèle à la bissectrice des arrêtes 521 et 522.

Ainsi, une onde 505 de direction et de polarisation linéaire déterminées pénétrant dans la lame quart d'onde 501 la traverse selon la direction 507 pour y devenir de polarisation circulaire avant de pénétrer dans un cristal 502 dont l'indice de réfraction étant ajustable, par exemple sous l'effet d'un champ électrique générée par des électrodes 516, puis de préférence entre dans un autre cristal 503 dont l'indice de réfraction est aussi ajustable, par exemple sous l'effet d'un champ électrique générée par des électrodes 517 générant un champ électrique perpendiculaire au champ généré par les électrodes 516.

Deux ondes 508 et 509 polarisées circulairement ressortent alors du cristal 503 et pénètrent dans l'assemblage 524 en des lieux différents selon le choix de l'indice de réfraction imposé au cristal 503. La direction du rayon lumineux étant différente selon ces lieux, la direction des arrêtes 520 et 521 est de préférence différente pour chaque élément 510 de l'assemblage 524.

Sur le schéma illustré à la figure 5B, les ondes 511 et 512 sont donc deux possibilités pour le rayon lumineux de traverser l'assemblage 524. Ces ondes sortent de l'assemblage 524 polarisées linéairement selon des directions différentes et ayant une même direction de propagation mais en des lieux différents de la bordure 514 de l'assemblage 524. Elles pénètrent dans un autre cristal 504 dont l'indice de réfraction est ajustable électriquement par des électrodes 518 puis, de préférence, encore un autre cristal 505 dont l'indice de réfraction est aussi ajustable par des électrodes 519 créant un champ électrique perpendiculaire au champ créé par les électrodes 518 , et dont les tensions sont ajustées en fonction de l'indice de réfraction choisi pour les cristal 502 et 503 de telle sorte que les ondes lumineuses ressortent toujours selon une onde 513 de même direction du cristal 505 au même endroit 515.

Les cristaux 502 503, 504 et 505 sont par exemple des cristaux liquides E7 de Merck aux bornes desquelles les électrodes appliquent par exemple des tensions comprises entre 0 et 5 000V si la distance entre les électrodes de chacune des paires est de 5mm, permettant de faire varier leurs indices de réfraction entre 1.5 et 1.67. Les électrodes sont de préférences recouvertes d'un film diélectrique. Ces indices de réfraction modifiés par les champs électriques pouvant être différents selon la direction relative du champ électrique de la lumière et de la direction du champ électrique, l'application de tensions électriques perpendiculaires successives permet de modifier l'indice de réfraction pour chacune des deux composantes de ladite lumière, celle-ci étant la superposition des ondes dont le champ électrique est perpendiculaire à la figure 5B et des ondes dont le champ électrique est perpendiculaire à la direction de propagation et dans le plan de la figure.

Dans un deuxième exemple de réalisation (non représenté) de la modification de la direction de polarisation, l'onde polarisée linéairement selon une direction déterminée pénètre une première lame quart d'onde transformant sa polarisation en polarisation circulaire, puis une seconde lame quart d'onde transformant cette polarisation circulaire en une polarisation linéaire selon une direction ajustable dépendant de l'orientation de cette seconde lame quart d'onde. L'orientation de la seconde lame quart d'onde est obtenue par exemple par asservissement mécanique à un capteur, ou à un dispositif commandé électriquement permettant sa rotation, par exemple en frottant sur un axe mis en mouvement par un matériau piézo-électrique ou par un dispositif de moteur électrique, par exemple à courant continu.

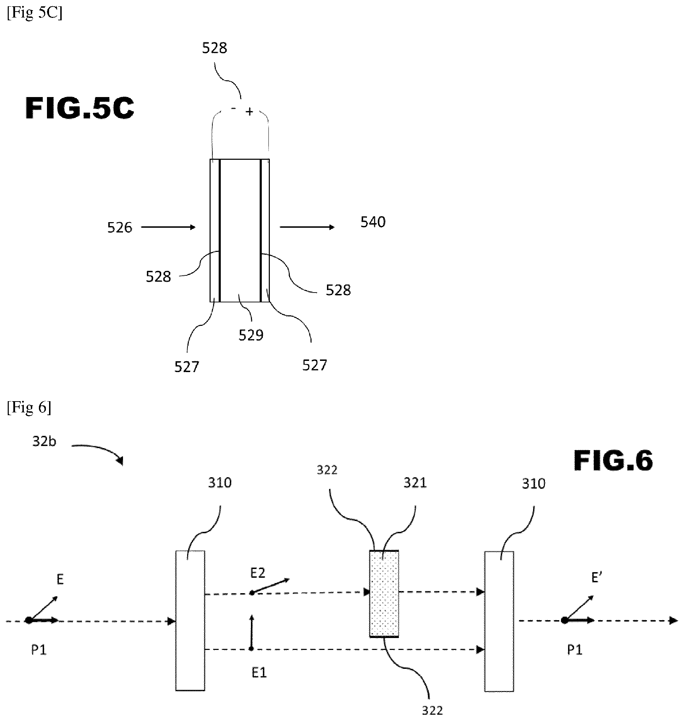

Dans un troisième exemple illustré à la figure 5C, on utilise des cristaux liquides pour contrôler la rotation du champ électrique linéaire des photons incidents 526 polarisés linéairement selon une même direction de polarisation, qui commencent par exemple par traverser, de préférence perpendiculairement, une de deux électrodes transparentes 527 de $0.2\mu m$ enrobée sur l'une de ses faces 528 d'un matériau orientant les particules de cristal liquides 529 adjacentes à ladite face 527 dans la direction de la polarisation des photons incidents 526 , puis traverser le cristal liquide 529 sur 2 $\mu m$ avant de traverser la deuxième électrode transparente 527 dont la face 528, de préférence parallèle à la première électrode, est aussi enrobée d'un matériau permettant d'aligner les cristaux liquides mais dans une diction perpendiculaire à la direction imposée par l'enrobage de la première électrode. La direction des cristaux liquides entre les eux électrodes est ainsi graduellement modifiée de 0° à par exemple 60° par rapport à leur orientation initiale. L'application d'une tension électrique compris par exemple entre 0 et 1V réoriente graduellement les cristaux liquides pour leur imposer une direction dans l'axe de la direction de propagation des photons, réduisant ainsi graduellement l'écart d'indice de réfraction des cristaux liquides entre les deux polarisations perpendiculaires au déplacement des photons et le pouvoir rotatif du dispositif. Ce dispositif permet donc de choisir continument la direction de sortie de la polarisation du photon incidente entre 0 et 60°.

Les dispositifs tels que celui illustré à la figure 5B sont avantageusement utilisés dans un dispositif similaire à celui décrit plus haut et illustré à la figure 5A, par exemple placé entre les lames 524 et 504 , chacun de par exemple 4 éléments 510 permettant de placer la polarisation linéaire d'un photon incident dans une de quatre directions précises, par exemple -90°, -45°,0° et +45°, puis chacun des dispositifs décrits à la fifure 5B placés à la suite, et de préférence alignés avec la direction de propagation des photos sortant des dispositifs 510 qui les précèdent, permettant d'ajouter à cette rotation, une rotation de n'importe quel angle compris entre par exemple 0 et 45°.

On a illustré à la figure 6 un modificateur de phase de polarisation 32b. Le modificateur de phase 32b comporte une première lame ou prisme biréfringent 310 agencé pour partager le photon incident P1 de champ de polarisation E en deux ondes électromagnétiques de polarisation linéaire $E_1$ et $E_2$ sur deux axes différents $x_1$ et $x_2$.

On dispose sur le deuxième axe x2 une lame à retard 321 d'indice de réfraction variable, par exemple comportant une cellule de Pockels telle que du Niobate de Lithium, commandée par des électrodes 322 ou un matériau non linéaire, de façon à faire acquérir à l'onde $E_2$ orientée selon le second axe $x_2$ un déphasage prédéterminé par rapport à l'onde $E_1$ orientée selon le premier axe $x_1$.

Une autre lame biréfringente 310, par exemple constituée de paratellurite, est disposée à la sortie du modificateur de phase 32b permettant de réunir selon un même axe x les deux ondes dont les champs de polarisations $E_1$ et $E_2$ sont perpendiculaires en une onde ou photon P1 de champ E' ayant acquis un déphasage par rapport au champ E. Alternativement, pour profiter de la modification différente de l'indice de réfraction du cristal selon la direction du champ électrique de la lumière relative à la direction du champ électrique modificateur de l'indice de réfraction, une simple cellule de Pockels 321 peut être utilisée avec les électrodes 322 mais sans les lames 310.

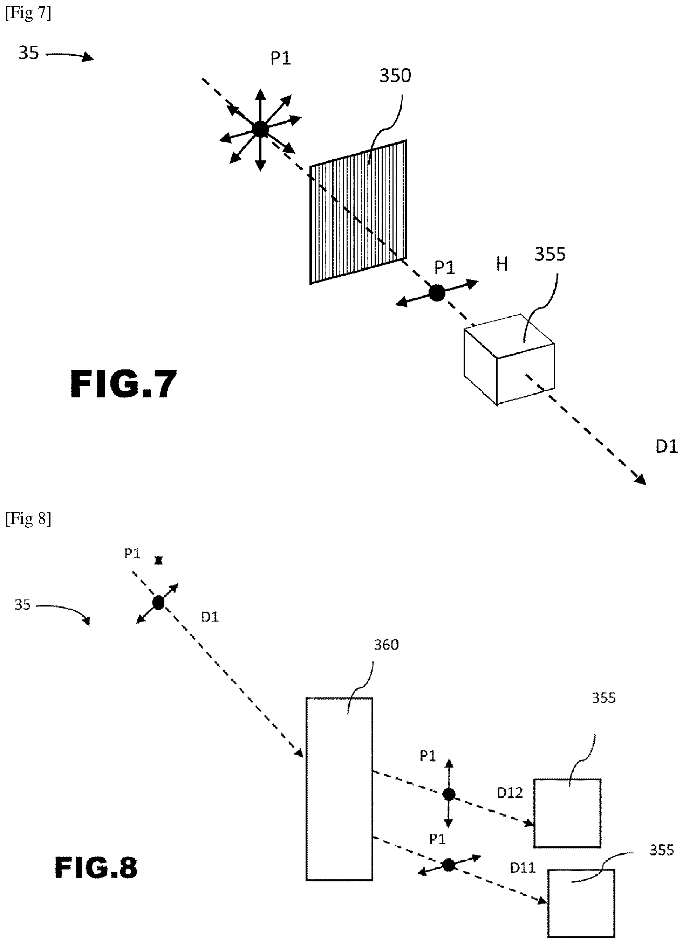

Les instruments de mesure 35 du premier récepteur 3 peuvent être de types variés et comporter divers éléments. Ces derniers dépendent notamment de la nature de la polarisation du photon P1 lors qu'il est émis par l'émetteur 2. Certains exemples sont illustrés aux figures 7 et 8 et décrits ci-après.

Dans l'exemple illustré à la figure 7, l'instrument de mesure 35 comporte un filtre polarisant 350 disposé sur le chemin de propagation D1 du photon P1, et un détecteur de photons 355 disposé sur le même chemin de propagation, en aval du filtre 350.

Le filtre polarisant 350 ne laisse passer que les photons présentant une certaine polarisation linéaire et absorbe ceux dont la polarisation en est perpendiculaire. Il permet donc de sélectionner les photons ayant une polarisation rectiligne d'une certaine direction.

Dans l'exemple considéré, le filtre polarisant 350 est une grille formée de fils, par exemple métalliques, verticaux. Il ne laisse passer que les photons présentant une polarisation rectiligne horizontale H.

Dans une variante illustrée à la figure 8, l'instrument de mesure 35 comporte une plaque anisotrope 360, par exemple une lame biréfringente, un prisme biréfringent ou deux prismes biréfringents accolés entre eux. La plaque est par exemple en béta borate de baryum ($BaB_2O_4$, BBO).

Le photon P1 dont l'état quantique doit être mesuré atteint la plaque 360 sur un chemin de propagation incident D1, et est transmis sur l'un de deux chemins de propagation D11 ou D12, selon par exemple que sa polarisation est dans le plan de lame 360 (c'est-à dire, perpendiculaire au plan de la figure 8), ou normal au plan de la lame 360.

L'instrument de mesure 35 comporte en outre deux détecteurs 355, chacun placé sur un chemin de propagation D11 ou D12 du photon P1.

Dans cet exemple et contrairement au filtre polarisant, tous les photons peuvent être détectés par les détecteurs 355, quelle que soit leur polarisation.

Dans certains modes de réalisation, une lame quart d'onde est placée en amont de la lame anisotrope 360 afin de transformer une polarisation circulaire d'un photon en polarisation linéaire, et ainsi détecter le sens de la rotation d'un photon polarisé circulairement.

Le deuxième récepteur 4 peut comporter différents types d'amplificateur optique 40 et d'instrument de mesure 45.

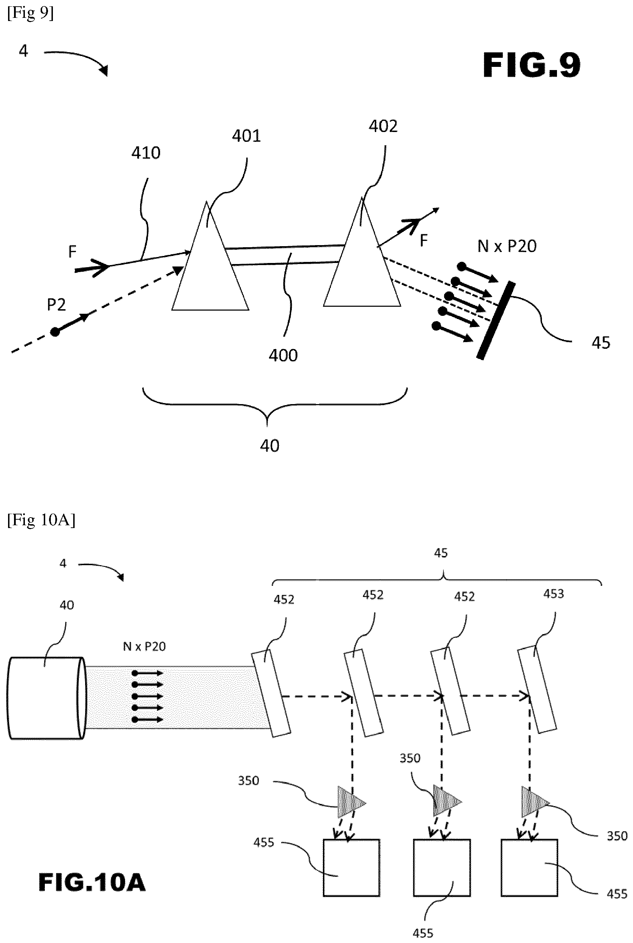

On utilise par exemple un amplificateur à fibres dopées tel qu'illustré à la figure 9.

Dans cet exemple, l'amplificateur 40 comporte une fibre 400, notamment une fibre en matériau non linéaire, dans laquelle le deuxième photon P2 est introduit après avoir traversé un prisme dichroïque 401 lorsqu'il atteint le récepteur 4.

Une onde électromagnétique de contrôle F servant à apporter l'énergie et démultiplier le photon P2 est introduite par une fibre 410 dans le même prisme dichroïque 401 en un point et avec une direction tels qu'elle ressort dans la fibre 400 tout comme le photon P2, le photon P2 et l'onde de contrôle F ayant des longueurs d'ondes différentes.

L'onde de contrôle F est de préférence de forte intensité lumineuse et de préférence de longueur d'onde plus faible de celle du photon P2.

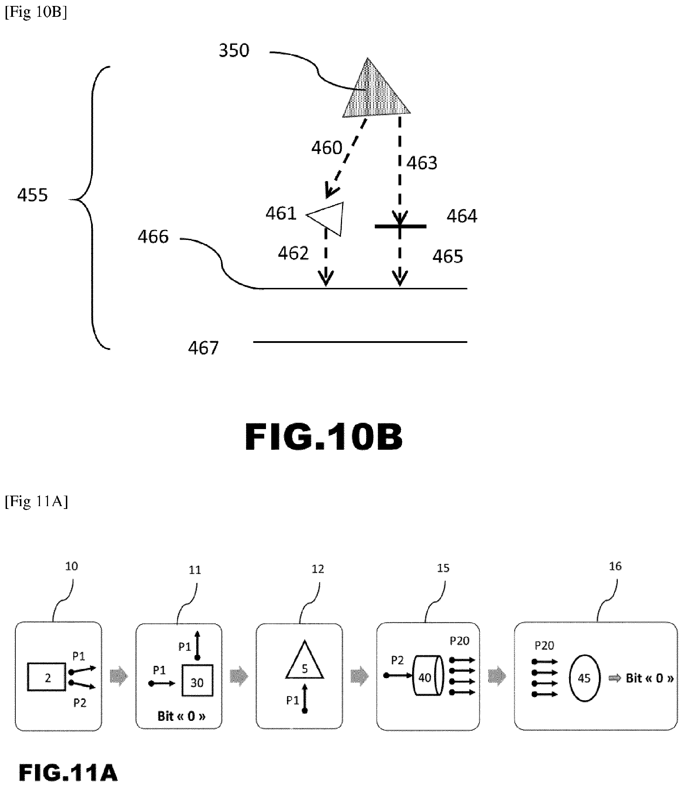

Lors de son passage dans la fibre 400 et sous l'effet du flux lumineux F, le photon P2 est démultiplié en N photons P20, puis ces N photons et le flux F traversent un second prisme dichroïque 402 dont ils ressortent dans des directions différentes. Les N photons sont alors avantageusement dirigés vers un instrument de mesure 45, permettant de déterminer la polarisation du flux lumineux et dont des exemples de réalisation sont donnés aux figure 10A et 10B.

On peut déduire des mesures de l'instrument de mesure 45 l'information transmise par le premier récepteur, car l'amplification du photon P2 par le dispositif 40 conserve sa polarisation.

En particulier, si le photon P2 est le photo intriqué d'un photon P1 absorbé dans un de deux polarisations complémentaires connues au premier récepteur, les N photons démultipliés P20 sont mesurés avec une polarisation qui peut être déduite de la polarisation d'absorption du photon P1 par la matrice de Jones calculée lors d'un étalonnage tel que décrit plus haut. L'instrument de mesure 45 peut comporter une succession de lames semi-réfléchissantes 452 et un miroir 453, comme illustré à la figure 10A. Les lames 452 et le miroir 453 dirigent les photons démultipliés P20, qui forment un flux lumineux, vers par exemple des prismes en matériaux biréfringents 350 avec de préférence une intensité égale. Les filtres 350 partagent le flux lumineux en deux flux de lumières polarisées orthogonalement, pour que les détecteurs 455 puissent déterminer soit l'intensité dudit flux selon chacune des directions orthogonales, soit déterminer le déphasage entre les deux composantes orthogonales du flux, par le bais par exemple d'un interféromètre de Michelson ou d'un interféromètre à fentes d'Young.

Les interféromètres sont de préférence agencés pour que les chemins lumineux des deux composantes orthogonales soit identiques, le flux lumineux provenant de la démultiplication d'un seul photon étant très bref. L'utilisation de plusieurs paires de directions orthogonales, par exemple décalées de 45° l'une de l'autre permet avantageusement de mesurer la polarisation c'est-à-dire la direction de la polarisation ainsi que le déphasage entre les deux directions, plusieurs fois permettant ainsi une plus grande précision dans la mesure.

La figure 10B représente un exemple d'un tel interféromètre à fentes d'Young. Deux ondes 460 et 463 sont issues du prisme 350. L'onde 460 passe par exemple à travers un prisme 461 redressant sa direction de propagation pour qu'elle devienne en 462 parallèle à l'onde 463. L'onde 463 passe par exemple à travers une lame demi-ondes permettant d'aligner le champ électrique de ladite onde 465 avec celui de l'onde 462. Les ondes 462 et 465 traversent alors deux trous perforés dans un écran 466 avant d'interférer l'une avec l'autre pour former des franges sur un écran 467 observé par une caméra ou bien doté de capteurs photosensibles permettant de déterminer la position sur ledit écran 467 de la frange la plus lumineuse.

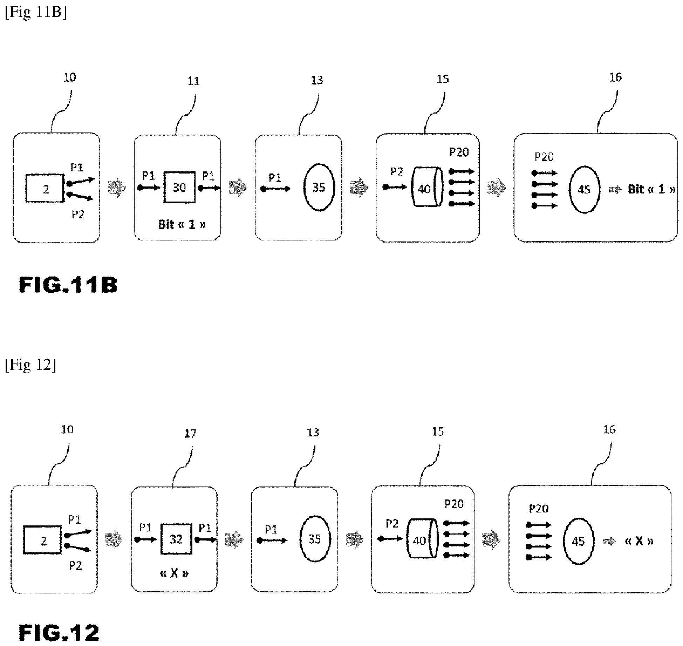

On peut transmettre des informations, notamment des informations de type binaire, entre les récepteurs 3 et 4 d'un système 1 tel que celui décrit à la figure 1B, en suivant par exemple les étapes illustrées aux figures 11A et 11B.

Le protocole de correspondance entre les informations à transmettre, par exemple, entre envoyer un bit « 0 » ou un bit « 1 », et la mesure, ou non, le premier photon P1, est déterminée avant le début de la transmission.

A titre d'exemple, on choisit pour la suite de ne pas mesurer le premier photon P1 pour transmettre un « 0 », et de le mesurer pour transmettre un « 1 ». Bien entendu, le choix inverse, ou toute autre correspondance adaptée, serait aussi valide.

A l'étape 10, deux photons intriqués P1 et P2 sont émis simultanément depuis un émetteur 2 vers des récepteurs 3 et 4, respectivement, le récepteur 3 étant placé plus proche de l'émetteur 2 que le récepteur 4, comme décrit plus haut.

Les photons émis P1 et P2 présentent un état quantique indéterminé dans une paire prédéterminée de polarisations complémentaires , par exemple une polarisation à 45° s'ils sont polarisés linéairement (les polarisations complémentaires étant 0° et 90).

A l'étape 11, le photon P1 atteint le sélecteur optique 30 du récepteur 3.

Si un bit « 0 » doit être transmis, le photon P1 est par exemple réfléchi par le sélecteur optique, sur un chemin perpendiculaire dans l'exemple illustré à la figure 11A (mais tout autre chemin est possible), de manière à ne pas pouvoir atteindre l'instrument de mesure 35. Le photon P1 peut notamment être piégé à l'étape 12 dans un dispositif de protection de son état quantique 5, afin d'éviter son absorption, au moins tant que le deuxième photon P2 n'a pas atteint le deuxième récepteur 4.

Le photon P1 conserve par exemple sa polarisation à 45°.

Si un bit « 1 » doit être transmis, le photon P1 traverse par exemple le sélecteur optique 30 pour se diriger vers l'instrument de mesure 35, comme illustré à la figure 11B.

L'état quantique du photon P1 est ensuite mesuré par l'instrument de mesure 35, à l'étape 13.

Le photon P1 a maintenant un état quantique déterminé, par exemple une polarisation verticale (90°), ou une polarisation horizontale (0°). Instantanément, la mesure effectuée à l'étape 13 projette le photon intriqué P2 dans un état déterminé.

A l'étape 15, quelle que soit l'information à transmettre, le photon P2 atteint l'amplificateur optique 40 du deuxième récepteur 4, où il y est dupliqué en un flux de photons démultipliés P20, chaque photon P20 ayant conservé la polarisation du photon P2.

A l'étape 16, la polarisation du flux de photons P20 est mesuré par un instrument de mesure 45.

Si, en moyenne, un état intermédiaire est obtenu, par exemple une polarisation à 45°, on en déduit que le premier photon P1 n'a pas été mesuré, et un bit « 0 » est reçu.

Si un état quantique correspondant à une mesure dans le premier récepteur 3 est obtenu, par exemple une polarisation verticale (90°) ou horizontale (0°), on en déduit que le premier photon P1 a été mesuré, et un bit « 1 » est reçu.

On peut encore transmettre des séries de valeurs discrètes entre les récepteurs 3 et 4 d'un système 1 tel que celui décrit à la figure 1A, en suivant par exemple les étapes illustrées à la figure 12.

A l'étape 10, deux photons intriqués P1 et P2 sont émis simultanément depuis un émetteur 2 vers des récepteurs 3 et 4, respectivement, par exemple avec une polarisation linéaire.

A l'étape 17, le photon P1 atteint le modificateur de polarisation 32, qui transforme la polarisation linéaire du photon P1 vers une paire choisie de polarisations complémentaires, la paire ayant été choisie selon le formalisme de Jones et correspondant à une valeur discrète à transmettre.

A l'étape 13, le photon P1 est absorbé par l'instrument 35 dans l'un des deux états complémentaires de la paire choisie, projetant par la même occasion le photon intriqué P2 dans son état complémentaire.

Les étapes suivantes 15 et 17 sont similaires à celles décrites plus haut ; la polarisation du photon P2 est mesurée par amplification puis absorption, et la valeur discrète transmise est déduite.

L'invention n'est pas limitée à la mesure d'une polarisation linéaire des photons. D'autres types d'état quantique peuvent être mesurés, et/ou d'autres moyens de mesure peuvent être utilisés, notamment des mesures dans d'autres bases observables.

Les photons P1 et P2 sont par exemple émis avec une polarisation intriquée circulaire, et l'instrument de mesure 35 projette, en mesurant une polarisation linéaire, le photon P1 et par intrication le photon P2, dans une base de polarisation linéaire.

En variante, les photons P1 et P2 sont émis avec une polarisation intriquée linéaire, et l'instrument de mesure 35 projette, en mesurant une polarisation circulaire, le photon P1 et par intrication le photon P2 selon cette base observable.

Dans un autre exemple, les photons P1 et P2 sont émis avec une polarisation linéaire intriquée à la verticale ou à l'horizontale et l'instrument de mesure 35 mesure une polarisation linéaire à 45° ou -45° de la verticale ou de l'horizontale.

Dans une variante, le récepteur 3 comporte deux instruments de mesure 35, l'un mesurant une polarisation linéaire, l'autre mesurant une polarisation circulaire. Le sélecteur optique envoie par exemple le photon P1 vers le premier instrument de mesure si un bit « 1 » doit être transmis, vers le second instrument de mesure si un bit « 2 » doit être transmis, et l'empêche d'être mesuré si un bit « 0 » doit être transmis.

Dans chacun des exemples ci-dessus, l'instrument de mesure 45 du deuxième récepteur 4 peut être configuré pour détecter si le premier photon P1 a été mesuré, ou non, et, le cas échéant, avec quelle polarisation il a été mesuré au premier récepteur.

Des gyroscopes peuvent en outre être utilisés à l'émetteur 2 et aux récepteurs 3 et 4 pour déterminer la direction de polarisation des photons P1 et P2, si ceux-ci sont émis et transportés vers les récepteurs avec une polarisation linéaire.

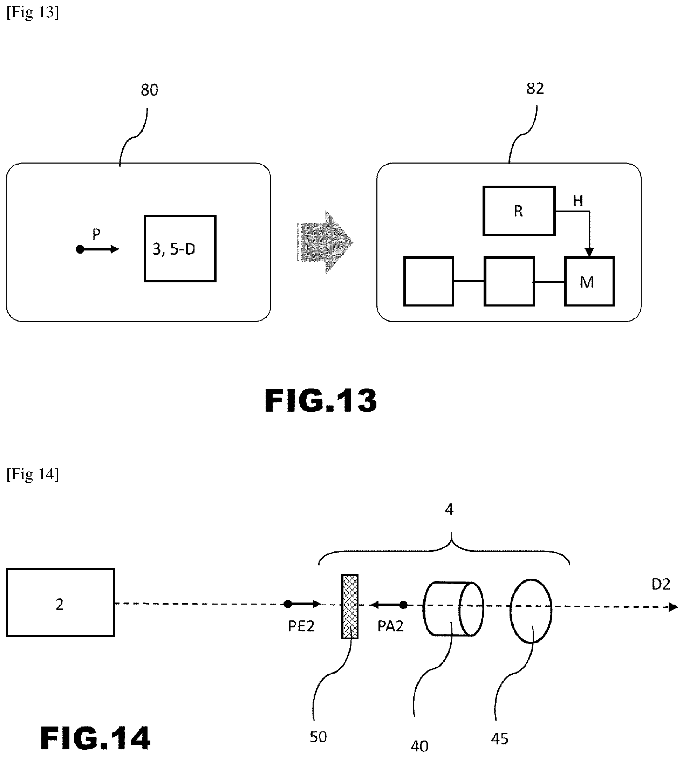

Comme mentionné plus haut, les récepteurs 3 et 4 ainsi que le dispositif 5 peuvent être munis de dispositifs de comptage des photons lors de leur absorption, et éventuellement après leur attente de l'absorption de leur photon intriqué, qui peut s'accompagner d'un horodatage de leur arrivée, comme illustré à la figure 13. Cela peut permettre par exemple de contrôler la correspondance entre les paires de photons intriqués et les bits transmis.

Chaque photon déclenche par exemple le procédé d'horodatage en arrivant au récepteur à l'étape 80, notamment en atteignant un des instruments de mesure 35 ou 5D. Suite à cet évènement déclencheur, le récepteur 3 copie par exemple à l'étape 82 l'heure courante H à l'horloge dudit récepteur, par exemple inscrite dans un registre R, sur un registre de mémoire libre M, de préférence après avoir soustrait de l'heure d'arrivée au détecteur 5-D le temps de transit du photon dans le dispositif d'attente 5.

Un dispositif similaire (non représenté) peut être agencé au second récepteur 4.

De préférence, les horloges permettant l'horodatage qui vient d'être décrit sont synchronisées pour les deux récepteurs 3 et 4, ce qui permet éventuellement de définir des intervalles de temps de traitement des photons communs aux deux récepteurs, et de traiter les doubles paires « multiples » de photons émise par l'émetteur 2.

Le deuxième récepteur 4 peut par ailleurs comporter un commutateur 50 placé devant l'amplificateur optique 40, et configuré pour absorber ou réfléchir le ou les photons éventuels non désirés PE2 qui atteignent le récepteur 4 après le photon P2 au sein d'un même intervalle de temps de traitement, comme représenté à la figure 14.

Le commutateur 50 peut de plus absorber d'éventuels photons PA2 émis par l'amplificateur 40 vers l'émetteur 2 lors de l'amplification du signal, ou lors de la désexcitation de molécules ou atomes du milieu amplificateur.

Le commutateur 50 est par exemple commandé par un mécanisme électronique (non représenté) lui-même commandé par les instruments de mesure 45 quand ceux-ci ou l'un d'eux détecte des photons.

Dans certains modes de réalisation, le système selon l'invention peut comporter plusieurs émetteurs disposés différemment relativement aux récepteurs, afin notamment d'établir une communication bidirectionnelle.

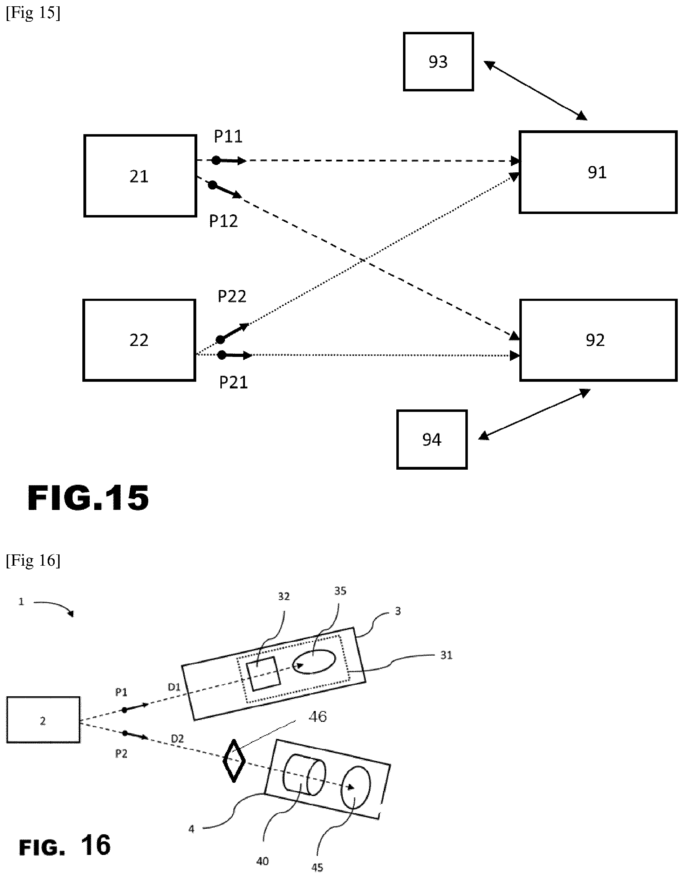

Dans l'exemple illustré à la figure 15, le système 1 comporte deux émetteurs 21 et 22, émettant chacun des paires de photons intriqués vers deux récepteurs 91 et 92.

L'émetteur 21 est plus proche du récepteur 91 que du récepteur 92, et l'émetteur 22 est plus proche du récepteur 92 que du récepteur 91. Cette disposition permet aux récepteurs 91 et 92 de communiquer de manière bidirectionnelle ; le photon P11 émis par l'émetteur 21 arrive en premier au récepteur 91, qui peut alors agir comme premier récepteur 3, c'est-à-dire transmettre une information vers le récepteur 92 qui reçoit son photon intriqué P12 et agit comme deuxième récepteur 4.

Inversement, le photon P21 émis par l'émetteur 22 arrive en premier au récepteur 92, qui cette fois peut transmettre une information vers le récepteur 91 qui reçoit le photon intriqué P22. Le mécanisme de transmission d'informations, notamment binaires, est par exemple similaire à ce qui a été décrit plus haut, aux figures 11 et 12.

Des dispositifs de réflexion 93 et 94 peuvent être disposés à proximité des récepteurs 91 et 92, respectivement, afin de réfléchir les photons éventuellement réfléchis par les récepteurs 91 et 92.

On va maintenant décrire en référence à la figure 16 une variante de mise en œuvre du premier aspect, destinée à vérifier une non-écoute d'une information transmise par l'émetteur 2 et le cas échéant à générer une clé partagée pour l'échange d'informations entre les récepteurs 3 et 4, à partir du transfert d'information que l'on sait ne pas avoir été écouté.

Le système de la figure 16 est modifié par l'ajout d'au moins un filtre polarisant 46 en entrée du récepteur 4, ce filtre ayant une direction de polarisation qui correspond à celle attendue pour les photons ayant voyagé depuis l'émetteur jusqu'au récepteur 4. Le filtre polarisant 46 est ainsi disposé en amont du changement de polarisation des photons initié par le récepteur 3 émettant l'information à destination du récepteur 4.

Le filtre 46 empêche un récepteur frauduleux de remplacer le récepteur 4 authentique, d'observer la polarisation exacte du photon intriqué après démultiplication dudit photon, puis d'émettre à destination du récepteur 4 authentique un photon frauduleux, en replacement du photon authentique, pour être forcément observé par le récepteur 4 dans la même polarisation relative que le photon authentique, car d'une part si ce dernier photon n'est pas intriqué à un autre photon sa polarisation ne changera pas après avoir passé le filtre 46 et aura donc la polarisation imposée par le filtre 46 et non pas celle du photon authentique , et d'autre part si le photon frauduleux est intriqué à un autre photon dit second photon frauduleux, il n'est pas possible d'imposer la polarisation relative de ces photons frauduleux ni par ailleurs de détruire ou stopper ledit photon frauduleux après qu'il ait passé le filtre 46, si la vérification de la polarisation relative de son photon intriqué est alors vérifiée comme inadéquate, par un appareil tiers.

Il est donc extrêmement improbable que tous ou certains des photons d'un groupe de photons intriqués observés par les deux récepteurs 3 et 4 aient été observés par ailleurs, si leurs polarisations relatives sont toujours différentes.

On peut vérifier statistiquement l'égalité de l'état quantique des photons utilisés pour la transmission des informations arrivant à chacun des deux récepteurs 3 et 4 et en déduire que la probabilité pour que certains des photons ait été observés est faible, en appliquant la méthode suivante :

Lors de la réception des photons par chacun des récepteurs 3 et 4, les récepteurs notent l'heure de réception ainsi que la polarisation exacte des photons par l'utilisation de détecteurs de photons, et non seulement à quelle paire de polarisations complémentaires ils appartiennent. Les heures et polarisations des photons détectés trop proches les uns des autres pour avoir leur polarisation ou leur heure d'arrivée mesurée indépendamment ne sont cependant, de préférence pas notées et les deux récepteurs 3 et 4 possédant de préférence, des horloges synchronisées.

Après un nombre déterminé de photons porteur d'une information I reçus, le second récepteur 4 génère un message comportant l'heure précise de détection et la polarisation pour chacun des photons dont ces attributs ont été notés et ayant été retenus comme transmettant une information et donc appartenant à un groupe de NSP photons ou plus ayant une polarisation donnée ou bien la polarisation complémentaire de cette polarisation ; NSP est défini plus haut comme le nombre seuil prédéterminé de photons reçus dans une polarisation donnée ou sa polarisation complémentaire permettant d'identifier la réception d'information.

Ce message est signé, de préférence à l'aide de la technique de hash aléatoire décrite dans la demande US20210165914 A1, par le récepteur 4, puis est envoyé au récepteur 3 avec ladite signature, de préférence en mettant en œuvre un moyen de transmission quantique tel que décrit plus haut, puis la signature du message reçu est vérifiée, ainsi que la correspondance des polarisations relatives des photons reçus par les deux récepteurs pour les paires de photons dont les deux photons ont atteint les récepteurs . Cette information 1 peut être déclarée ne pas avoir été écoutée lors de sa transmission entre les deux récepteurs si la vérification de la signature faire apparaître celle-ci comme authentique et que la proportion de polarisations ne correspondant pas est inférieure à un seuil donné, par exemple 1% si 450 paires de polarisations différentes sont utilisées, ou un multiple tel 2 de la probabilité pour que deux paires de photons intriqués différentes soient émises à des dates indiscernables par les récepteurs.

De plus, une polarisation relative dans chacune des paires de polarisations des photons ayant été retenus pour avoir transmis l'information I, si cette polarisation relative a été vérifiée comme étant différente pour chacun des photons arrivés à chacun des récepteurs, peut être utilisée pour former une suite de bits formant une clé générée aléatoirement et connue uniquement de chacun des récepteurs ; le récepteur 3 ayant effectué la vérification de concomitance des polarisations relatives enverra à l'autre récepteur 4 un message signé, de préférence par la technique du hash aléatoire, formé de la liste des dates de réception des photons pour lesquels les polarisations relatives ne correspondent pas ou pour lesquels le photon intriqué n'a jamais atteint le récepteur 3.

Ainsi, dans un exemple, les étapes suivantes sont mises en œuvre.

Etape 1

Le récepteur 4 reçoit de l'émetteur 2 un flux de photons véhiculant une information et établit une première liste des dates de réception des photons ayant servi à déterminer cette information ainsi que la polarisation relative désignant celle des deux polarisations complémentaires dans laquelle le photon a été reçu.

Etape 2

Le récepteur 4 forme un message constitué de la liste des informations collectées à l'étape précédente, crée une signature électronique de cette liste et transmet ladite liste ainsi que la signature au récepteur 3.

Etape 3

Le récepteur 3 reçoit la liste et la signature puis vérifie ladite signature.

Etape 4

Le récepteur 3 fait une seconde liste constituée des éléments de la première liste dont les polarisations relatives des photons reçus par les récepteurs 3 et 4 sont les mêmes ou dont le photon intriqué n'a jamais atteint le récepteur 3, ledit récepteur 3 ayant enregistré dans un registre la polarisation relative de chaque photon ayant servi à la transmission d'information ainsi que sa date de réception. Connaissant la différence de temps de trajet des photons intriqués entre l'émetteur 2 et chacun des deux récepteurs 3 et 4, il peut retrouver pour chaque photon de la première liste la polarisation relative du photon qu'il a reçu à la date de réception du photon par le récepteur 4, à laquelle le temps de trajet a été soustrait. Cette seconde liste est de préférence constituée de deux parties distinctes, une première de ces parties regroupant les photons dont le photon intriqué n'a jamais atteint le premier récepteur 3 et une seconde partie regroupant les photons dont les deux photons intriqués ont atteint leurs récepteurs respectifs mais avec des polarisations relatives égales.

Etape 5

Si le nombre d'éléments de la seconde liste restreinte aux couples de photons intriqués dont chacun des deux photons ont atteint leurs récepteurs respectifs est inférieur au produit d'un ratio prédéterminé par le décompte des éléments de la première liste restreinte aux couples de photons intriqués dont chacun des deux photons ont atteint leurs récepteurs respectifs, alors l'information est déclarée avoir été transmise non écoutée.

Etape 6

Si l'information est déclarée avoir été transmise non écoutée, alors la seconde liste est envoyée signée par le récepteur 3 au récepteur 4, puis une troisième liste est créée par le récepteur 3, constituée des polarisations relatives des photons figurant dans la première liste et ne figurant pas dans la seconde liste, c'est-à-dire concernant les photons pour lesquels les polarisations relatives ont été observées différentes.

Dans le cas contraire, c'est-à-dire si le produit précité est supérieur audit seuil, un message indiquant que la transmission est susceptible d'avoir été écoutée est envoyé par le récepteur 3 au récepteur 4.

Etape 7

A réception de la deuxième liste par le récepteur 4 et après vérification de la signature, la troisième liste est recréée dans le récepteur 4 à l'aide de la première et de la deuxième liste, puis un message signé, confirmant la bonne réception de la seconde liste, est envoyée par le récepteur 4 au récepteur 3.

Etape 8

Le récepteur 4 peut utiliser la troisième liste comme clé partagée avec le récepteur 3 ; Dès réception par le récepteur 3 du message transmis à l'étape 7, le récepteur 3 peut utiliser la troisième liste comme clé partagée avec le récepteur 4.

**Revendications**

1. Système de communication quantique (1) comportant :

   • Un émetteur (2) de photons intriqués comportant une source configurée pour générer au moins une paire de photons intriqués comportant un premier photon (P1) émis sur un premier chemin de propagation (D1), et simultanément un deuxième photon (P2) émis sur un deuxième chemin de propagation (D2) différent du premier chemin de propagation;
   • Un premier récepteur (3) disposé sur le premier chemin de propagation (D1), comportant :

      - au moins un premier instrument (35) agencé pour absorber le premier photon (P1) dans l'une de deux polarisations complémentaires, la polarisation du photon (P1) étant indéterminée dans la base observable selon laquelle le premier instrument absorbe les photons,
      - un sélecteur optique (30) disposé en amont dudit au moins un premier instrument (35) et configuré pour soit laisser passer le premier photon (P1) vers ledit au moins un premier instrument de mesure (35), soit l'empêcher d'être mesuré ;

   • Un deuxième récepteur (4) disposé sur le deuxième chemin de propagation (D2) de façon à être atteint par le deuxième photon (P2) après que le premier photon (P1) a atteint le sélecteur optique (30) et/ou après qu'il puisse avoir atteint l'instrument (35) du premier récepteur (3), ledit deuxième récepteur (4) comportant un amplificateur optique (40) permettant de démultiplier le deuxième photon (P2) en conservant sa polarisation et, disposé en aval de l'amplificateur, un instrument de mesure (45) permettant de mesurer l'état quantique moyen des photons démultipliés (P20) .

2. Système selon la revendication précédente, le premier récepteur (3) comportant au moins un deuxième instrument (35), le sélecteur optique (30) étant disposé en amont du premier et deuxième instrument (30) et configuré pour soit laisser passer le premier photon (P1) en le dirigeant vers l'un ou l'autre des instruments, soit l'empêcher d'être absorbé.

3. Système selon l'une quelconque des revendications précédentes, l'émetteur (2) étant configuré pour générer successivement une pluralité de paires de photons intriqués.

4. Système selon l'une quelconque des revendications précédentes, le sélecteur optique (30) comportant un réflecteur (310), notamment un miroir contrôlé, et/ou le sélecteur optique comportant un dispositif (310 ; 330) dont l'indice de réfraction et/ou la direction de réflexion sont contrôlés, notamment grâce un champ électrique ou un flux lumineux.

5. Système selon l'une quelconque des revendications précédentes, comportant un dispositif (5) de protection de l'état quantique d'au moins un photon, notamment un dispositif qui empêche la mesure ou l'absorption d'au moins un photon, disposé à proximité du premier récepteur (3) de façon à permettre de protéger l'état quantique du premier photon (P1) dans le cas où il est empêché d'être mesuré par le sélecteur optique (30), ledit état quantique du premier photon (P1) étant protégé au moins jusqu'à ce que le deuxième photon (P2) ait été démultiplié au deuxième récepteur (4), en particulier le dispositif de protection de l'état quantique (5) comportant un espace transparent, notamment un espace transparent et au moins un miroir.

6. Système selon l'une quelconque des revendications précédentes, au moins un instrument (35) du premier récepteur comportant au moins un filtre (350 ; 360) permettant d'envoyer le premier photon vers au moins un détecteur de photons (355), notamment vers l'un ou l'autre de deux détecteurs de photons (355) selon l'état de polarisation du premier photon, le filtre étant de préférence un prisme ou une lame en matériau biréfringent.

7. Système selon l'une des revendications précédentes, l'instrument (45) du deuxième récepteur (4) comportant au moins un détecteur de photons (455), agencé pour mesurer la polarisation de la lumière (P20) issue de la démultiplication du deuxième photon (P2), et/ou l'instrument de mesure (45) du deuxième récepteur (4) comportant une succession de lames semi-réfléchissantes disposées en aval de l'amplificateur optique (40), lesdites lames dirigeant le flux de photons démultipliés (P20) avec une égale intensité vers des filtres polarisants en aval desquels des détecteurs sont disposés.

8. Système selon l'une quelconque des revendications précédentes, l'amplificateur optique (40) étant un amplificateur à fibre dopée, et/ou le deuxième récepteur (4) comportant un commutateur (50) disposé devant l'amplificateur optique (40), configuré pour absorber ou réfléchir le ou les photons subséquents à un premier photon atteignant ledit second récepteur dans un intervalle de temps prédéterminé.

9. Système selon l'une quelconque des revendications précédentes, le premier récepteur (3) et/ou le second récepteur (4) comportant un ou plusieurs filtres dichroïques (420), lesdits filtres étant de préférence disposés devant le ou les instruments (35 ; 45), ou devant le sélecteur optique (30) pour le premier récepteur, et/ou l'émetteur (2) et chacun des récepteurs (3 ;4) comportant une horloge, les horloges de l'émetteur et des récepteurs étant synchronisées entre elles.

10. Système selon l'une quelconque des revendications précédentes, comportant un deuxième émetteur (22) pouvant générer une ou plusieurs paires de photons intriqués, le deuxième émetteur étant situé plus proche du deuxième récepteur (92) que du premier récepteur (91).

11. Procédé de communication quantique utilisant le système de l'une quelconque des revendications 1 à 10, comportant les étapes consistant à :

• Générer une paire de photons intriqués à partir d'un émetteur (2), le premier photon (P1) de la paire étant émis vers un premier récepteur (3) et le deuxième photon (P2) de la paire étant émis simultanément vers un deuxième récepteur (4), les premier et deuxième photons étant intriqués, le deuxième récepteur (4) étant situé sur le chemin de propagation (D2) du deuxième photon (P2) plus loin de l'émetteur (2) que le premier récepteur (3), de telle sorte qu'il y arrive après,
• Choisir, selon l'information à transmettre (« 0 », « 1 », « 2 »), d'absorber ou non le premier photon (P1) dans l'une de deux paires de polarisation complémentaires lorsqu'il atteint le premier récepteur (3) grâce à un sélecteur optique (30) dirigeant, ou non, ledit photon (P1) vers un ou vers l'un de plusieurs instruments (35),
• Dans le cas où il est choisi de ne pas absorber le photon dans une polarisation prédéfinie, piéger ledit premier photon (P1) dans un dispositif de protection (5) permettant d'éviter son absorption au moins tant que le deuxième photon (P2) n'a pas atteint le deuxième récepteur (4).
• Au second récepteur (4), dupliquer le deuxième photon (P2) en un flux de photons démultipliés (P20) grâce à un dispositif d'amplification (40), chaque photon démultiplié (P20) ayant conservé l'état quantique du deuxième photon (P2),
• Mesurer l'état quantique moyen du flux de photons démultipliés (P20) et déterminer selon cette mesure si le premier photon (P1) a été absorbé au premier récepteur (3), et/ou avec quel instrument, afin d'en déduire l'information transmise (« 0 », « 1 ») par le premier récepteur (3).

12. Procédé selon la revendication précédente, la polarisation de la paire de photons intriqués étant indéterminée dans la ou les bases observables dans laquelle ou lesquelles les instruments du premier récepteur (35) les absorbent,

13. Procédé selon la revendication 11 ou 12, la paire de photons intriqués atteignant les récepteurs (3 ;4) avec une polarisation intriquée linéaire, l'une des deux polarisations complémentaires d'absorption étant circulaire, le deuxième récepteur (4) étant agencé pour distinguer si la polarisation moyenne du flux de photons démultipliés (P20) est circulaire ou linéaire, et déterminer selon cette distinction si le premier photon a été mesuré ou non, ou

la paire de photons intriqués atteignant les récepteurs (3 ;4) avec une polarisation intriquée circulaire, l'état quantique mesuré au premier récepteur (3) étant une polarisation linéaire, le deuxième récepteur (4) étant agencé pour distinguer si la polarisation moyenne du flux de photons démultipliés (P20) est circulaire ou linéaire, et déterminer selon cette distinction si le premier photon (P1) a été mesuré ou non, ou
la paire de photons intriqués atteignant les récepteurs avec une polarisation linéaire verticale ou horizontale, l'état quantique mesuré au premier récepteur (3) étant une polarisation linéaire à 45° ou -45° de la verticale ou de l'horizontale, le deuxième récepteur (4) étant agencé pour distinguer si la polarisation linéaire moyenne du flux de photons démultipliés (P20) est à 45 ou -45°, ou bien la verticale ou l'horizontale, et déterminer selon cette distinction si le premier photon (P1) a été mesuré ou non.

14. Procédé selon l'une quelconque des revendications 11 à 13, plusieurs paires de photons intriqués étant générées successivement par l'émetteur (2), chaque paire de photons permettant la transmission d'une information (« 0 », « 1 », « 2 ») du premier récepteur (3) au deuxième récepteur (4).

15. Procédé selon l'une des revendications 11 à 14, dans lequel on vérifie la non-écoute d'une information transmise par un flux de photons de l'émetteur (2) au récepteur (4) en mettant en œuvre les étapes suivantes :

- le deuxième récepteur (4) établit une première liste des dates de réception des photons ayant véhiculé l'information ainsi que la polarisation relative désignant celle des deux polarisations complémentaires dans laquelle chaque photon a été reçu ;
- le deuxième récepteur (4) génère un message comportant la liste collectée à l'étape précédente, crée une signature électronique de cette liste et transmet ladite liste ainsi que la signature au récepteur (3) ;
- le premier récepteur (3) reçoit la liste et la signature puis vérifie ladite signature ;
- le premier récepteur (3) fait une seconde liste constituée des éléments de la première liste dont les polarisations relatives des photons reçus par les premier et deuxième récepteurs (3) et (4) sont égales, ou bien dont le photon intriqué n'a jamais atteint le premier récepteur (3) ; deux photons intriqués ayant des polarisations relatives différentes ;
- si le nombre d'éléments de la seconde liste restreinte aux couples de photons intriqués dont chacun des deux photons ont atteint leurs récepteurs respectifs est inférieur au produit d'un ratio prédéterminé par le décompte des éléments de la première liste restreinte aux couples de photons intriqués dont chacun des deux photons ont atteint leurs récepteurs respectifs, alors l'information est déclarée avoir été transmise non écoutée,
en particulier,
- si l'information est déclarée avoir été transmise non écoutée, alors la seconde liste est envoyée signée par le premier récepteur (3) au second récepteur (4), puis une troisième liste est créée par le premier récepteur (3), constituée des polarisations relatives des photons figurant dans la première liste et ne figurant pas dans la seconde liste,
- à réception de la deuxième liste par le deuxième récepteur (4) et après vérification de la signature, la troisième liste est recréée dans le deuxième récepteur (4) à l'aide de la première et de la deuxième liste, puis un message signé, confirmant la bonne réception de la seconde liste, est envoyée par le deuxième récepteur (4) au premier récepteur (3) ; et
- le deuxième récepteur (4) utilise la troisième liste comme clé partagée avec le premier récepteur (3) ; dès réception par le premier récepteur (3) du message transmis par le deuxième récepteur à l'étape précédente, le premier récepteur (3) utilise la troisième liste comme clé partagée dans des échanges avec le deuxième récepteur (4).

un filtre polarisant (46) étant notamment disposé en amont du deuxième récepteur (4).

**Patentansprüche**

1. Quantenkommunikationssystem (1), umfassend:

    • einen Sender (2) verschränkter Photonen, umfassend eine Quelle, die dazu ausgestaltet ist, mindestens ein Paar verschränkter Photonen zu erzeugen, das ein erstes Photon (P1), das auf einem ersten Ausbreitungspfad (D1) gesendet wird, und ein zweites Photon (P2), das gleichzeitig auf einem zweiten Ausbreitungspfad (D2) gesendet wird, der verschieden von dem ersten Ausbreitungspfad ist, umfasst;
    • einen ersten Empfänger (3), der auf dem ersten Ausbreitungspfad (D1) angeordnet ist, umfassend:

        - mindestens ein erstes Instrument (35), das dazu ausgebildet ist, das erste Photon (P1) in der einen von zwei komplementären Polarisationen zu absorbieren, wobei die Polarisation des Photons (P1) in der beobachtbaren Basis, gemäß der das erste Instrument die Photonen absorbiert, unbestimmt ist;
        - einen optischen Selektor (30), der dem mindestens einem ersten Instrument (35) vorgelagert angeordnet ist und dazu ausgestaltet ist, entweder das erste Photon (P1) zu dem mindestens einem ersten Messgerät (35) passieren zu lassen oder es daran zu hindern, gemessen zu werden;

    • einen zweiten Empfänger (4), der auf dem zweiten Ausbreitungspfad (D2) so angeordnet ist, dass er von dem zweiten Photon (P2) erreicht wird, nachdem das erste Photon (P1) den optischen Selektor (30) erreicht hat und/oder nachdem es das Instrument (35) des ersten Empfängers (3) erreicht haben kann, wobei der zweite Empfänger (4) einen optischen Verstärker (40) umfasst, der es ermöglicht, das zweite Photon (P2) unter Beibehaltung seiner Polarisation zu verstärken, und, dem Verstärker nachgelagert angeordnet, ein Messinstrument (45), das es ermöglicht, den mittleren Quantenzustands der verstärkten Photonen (P20) zu messen.

2. System nach dem vorhergehenden Anspruch, wobei der erste Empfänger (3) mindestens ein zweites Instrument (35) umfasst, wobei der optische Selektor (30) dem ersten und zweiten Instrument (30) vorgelagert angeordnet ist und dazu ausgestaltet ist, entweder das erste Photon (P1) passieren zu lassen, wobei es dieses zu dem einen oder anderen der Instrumente lenkt, oder es daran zu hindern, absorbiert zu werden.

3. System nach einem der vorhergehenden Ansprüche, wobei der Sender (2) dazu ausgestaltet ist, nacheinander eine Vielzahl von Paaren verschränkter Photonen zu erzeugen.

4. System nach einem der vorhergehenden Ansprüche, wobei der optische Selektor (30) einen Reflektor (310) umfasst, insbesondere einen gesteuerten Spiegel, und/oder wobei der optische Selektor eine Vorrichtung (310; 330) umfasst, deren Brechungsindex und/oder deren Reflexionsrichtung gesteuert werden, insbesondere durch ein elektrisches Feld oder einen Lichtstrom.

5. System nach einem der vorhergehenden Ansprüche, umfassend eine Vorrichtung (5) zum Schützen des Quantenzustands mindestens eines Photons, insbesondere eine Vorrichtung, die das Messen oder das Absorbieren mindestens eines Photons verhindert und die in der Nähe des ersten Empfängers (3) angeordnet ist, so dass sie es ermöglicht, den die Quantenzustand des ersten Photons (P1) in dem Fall zu schützen, in dem es von dem optischen Selektor (30) daran gehindert wird, gemessen zu werden, wobei der Quantenzustand des ersten Photons (P1) mindestens geschützt wird, bis das zweite Photon (P2) an dem zweiten Empfänger (4) verstärkt worden ist, wobei die Vorrichtung (5) zum Schützen des Quantenzustands im Besonderen einen transparenten Raum umfasst, insbesondere einen transparenten Raum und mindestens einen Spiegel.

6. System nach einem der vorhergehenden Ansprüche, wobei mindestens ein Instrument (35) des ersten Empfängers mindestens ein Filter (350; 360) umfasst, das es ermöglicht, das erste Photon zu mindestens einem Photonendetektor (355) zu senden, insbesondere je nach dem Polarisationszustand des ersten Photons zu dem einen oder anderen von zwei Photonendetektoren (355), wobei das Filter vorzugsweise ein Prisma oder eine Scheibe aus doppelbrechendem Material ist.

7. System nach einem der vorhergehenden Ansprüche, wobei das Instrument (45) des zweiten Empfängers (4) mindestens einen Photonendetektor (455) umfasst, der dazu ausgebildet ist, die Polarisation des Lichts (P20) zu messen, das aus der Verstärkung des zweiten Photons (P2) hervorgegangen ist, und/oder wobei das Messinstrument (45) des zweiten Empfängers (4) eine Folge von halbreflektierenden Scheiben umfasst, die dem optischen Verstärker (40) nachgelagert angeordnet sind, wobei die Scheiben den Strom verstärkter Photonen (P20) mit einer gleichen Intensität zu polarisierenden Filtern lenken, denen nachgelagert Detektoren angeordnet sind.

8. System nach einem der vorhergehenden Ansprüche, wobei der optische Verstärker (40) ein Verstärker mit dotierter Faser ist und/oder wobei der zweite Empfänger (4) einen Umschalter (50) umfasst, der vor dem optischen Verstärker (40) angeordnet ist und dazu ausgestaltet ist, das oder die auf ein erstes Photon folgenden Photonen, die den zweiten Empfänger in einem vorbestimmten Zeitintervall erreichen, zu absorbieren oder zu reflektieren.

9. System nach einem der vorhergehenden Ansprüche, wobei der erste Empfänger (3) und/oder der zweite Empfänger (4) einen oder mehrere dichroitische Filter (420) umfasst, wobei die Filter vorzugsweise vor dem oder den Instrumenten (35; 45) oder vor dem optischen Selektor (30) bei dem ersten Empfänger angeordnet sind und/oder wobei der Sender (2) und jeder der Empfänger (3; 4) eine Uhr umfassen, wobei die Uhren des Senders und der Empfänger untereinander synchronisiert sind.

10. System nach einem der vorhergehenden Ansprüche, das einen zweiten Sender (22) umfasst, der ein oder mehrere Paare verschränkter Photonen erzeugen kann, wobei der zweite Sender näher zu dem zweiten Empfänger (92) als zu dem ersten Empfänger (91) gelegen ist.

11. Quantenkommunikationsverfahren unter Verwendung des Systems nach einem der Ansprüche 1 bis 10, umfassend die folgenden Schritte:

    • Erzeugen eines Paars verschränkter Photonen ausgehend von einem Sender (2), wobei das erste Photon (P1) des Paars zu einem ersten Empfänger (3) gesendet wird und wobei das zweite Photon (P2) des Paars gleichzeitig zu einem zweiten Empfänger (4) gesendet wird, wobei das erste und das zweite Photon verschränkt sind, wobei der zweite Empfänger (4) auf dem Ausbreitungspfad (D2) des zweiten Photons (P2) weiter von dem Sender (2) als der erste Empfänger (3) gelegen ist, so dass es danach dort eintrifft,

    • Wählen, je nach der zu übertragenden Information ("0", "1", "2"), ob das erste Photon (P1) in einem von zwei Paaren mit komplementären Polarisationen absorbiert wird oder nicht, wenn es den ersten Empfänger (3) erreicht, mithilfe eines optischen Selektors (30), der das Photon (P1) zu einem oder zu dem einen von mehreren Instrumenten (35) lenkt,

• In dem Fall, in dem gewählt wird, das Photon in einer vordefinierten Polarisation nicht zu absorbieren, Fangen des ersten Photons (P1) in einer Schutzvorrichtung (5), die es ermöglicht, seine Absorption zumindest so lange zu verhindern, wie das zweite Photon (P2) den zweiten Empfänger (4) nicht erreicht hat.

• An dem zweiten Empfänger (4), Verstärken des zweiten Photons (P2) zu einem Strom verstärkter Photonen (P20) mithilfe einer Verstärkungsvorrichtung (40), wobei jedes verstärkte Photon (P20) den Quantenzustand des zweiten Photons (P2) beibehalten hat,

• Messen des mittleren Quantenzustands des Stroms verstärkter Photonen (P20) und Bestimmen, je nach dieser Messung, ob das erste Photon (P1) an dem ersten Empfänger (3) absorbiert worden ist und/oder mit welchem Instrument, um daraus die übertragene Information ("0", "1") durch den ersten Empfänger (3) abzuleiten.

12. Verfahren nach dem vorhergehenden Anspruch, wobei die Polarisation des Paars verschränkter Photonen in der oder den beobachtbaren Basen, in der oder denen die Instrumente des ersten Rezeptors (35) sie absorbieren, unbestimmt ist.

13. Verfahren nach Anspruch 11 oder 12, wobei das Paar verschränkter Photonen die Empfänger (3; 4) mit einer linearen verschränkten Polarisation erreicht, wobei eine der beiden komplementären Absorptionspolarisationen zirkular ist, wobei der zweite Empfänger (4) dazu ausgebildet ist, zu unterscheiden, ob die mittlere Polarisation des Stroms verstärkter Photonen (P20) zirkular oder linear ist, und je nach dieser Unterscheidung zu bestimmen, ob das erste Photon gemessen worden ist oder nicht, oder

wobei das Paar verschränkter Photonen die Empfänger (3; 4) mit einer zirkularen verschränkten Polarisation erreicht, wobei der an dem ersten Empfänger (3) gemessene Quantenzustand eine lineare Polarisation ist, wobei der zweite Empfänger (4) dazu ausgebildet ist, zu unterscheiden, ob die mittlere Polarisation des Stroms verstärkter Photonen (P20) zirkular oder linear ist, und je nach dieser Unterscheidung zu bestimmen, ob das erste Photon (P1) gemessen worden ist oder nicht, oder wobei das Paar verschränkter Photonen die Empfänger mit einer vertikalen oder horizontalen linearen Polarisation erreicht, wobei der an dem ersten Empfänger (3) gemessene Quantenzustand eine lineare Polarisation bei 45° oder - 45° von der Vertikalen oder Horizontalen ist, wobei der zweite Empfänger (4) dazu ausgebildet ist, zu unterscheiden, ob die mittlere lineare Polarisation des Stroms verstärkter Photonen (P20) bei 45 oder -45° liegt oder aber die Vertikale oder Horizontale ist, und je nach dieser Unterscheidung zu bestimmen, ob das erste Photon (P1) gemessen worden ist oder nicht.

14. Verfahren nach einem der Ansprüche 11 bis 13, wobei mehrere Paare verschränkter Photonen nacheinander von dem Sender (2) erzeugt werden, wobei jedes Photonenpaar die Übertragung einer Information ("0", "1", "2") von dem ersten Empfänger (3) an den zweiten Empfänger (4) ermöglicht.

15. Verfahren nach einem der Ansprüche 11 bis 14, bei dem das Nichtabhören einer Information, die durch einen Photonenstrom von dem Sender (2) an den Empfänger (4) übertragen wird, überprüft wird, indem die folgenden Schritte durchgeführt werden:

- der zweite Empfänger (4) erstellt eine erste Liste mit den Empfangszeitpunkten der Photonen, die die Information transportiert haben, sowie der relativen Polarisation, wobei diejenige der beiden komplementären Polarisationen bezeichnet wird, in der jedes Photon empfangen worden ist;
- der zweite Empfänger (4) erzeugt eine Nachricht, welche die in dem vorhergehenden Schritt zusammengestellte Liste umfasst, erstellt eine elektronische Signatur dieser Liste und überträgt die Liste sowie die Signatur an den Empfänger (3);
- der erste Empfänger (3) empfängt die Liste und die Signatur und überprüft anschließend die Signatur;
- der erste Empfänger (3) erstellt eine zweite Liste, die aus den Elementen der ersten Liste besteht, bei denen die relativen Polarisationen der von den ersten und zweiten Empfängern (3) und (4) empfangenen Photonen gleich sind oder aber bei denen das verschränkte Photon den ersten Empfänger (3) nie erreicht hat; wobei zwei verschränkte Photonen unterschiedliche relative Polarisationen aufweisen;
- wenn die Anzahl von Elementen der zweiten Liste, die auf die Paare verschränkter Photonen beschränkt ist, bei denen jedes der beiden Photonen seine jeweiligen Empfänger erreicht hat, kleiner ist als das Produkt aus einem vorbestimmten Verhältnis und einer Auszählung der Elemente der ersten Liste, die auf die Paare verschränkter Photonen beschränkt ist, bei denen jedes der beiden Photonen seine jeweiligen Empfänger erreicht hat, dann wird die Informationen als nicht abgehört übertragen betrachtet, im Besonderen,

- wird, wenn die Information als nicht abgehört übertragen betrachtet wird, die zweite Liste signiert durch den ersten Empfänger (3) an den zweiten Empfänger (4) gesendet und anschließend von dem ersten Empfänger (3) eine dritte Liste erstellt, die aus den relativen Polarisationen der Photonen besteht, die in der ersten Liste aufgeführt sind und in der zweiten Liste nicht aufgeführt sind,

- wird beim Empfangen der zweiten Liste durch den zweiten Empfänger (4) und nach dem Überprüfen der Signatur die dritte Liste in dem zweiten Empfänger (4) mithilfe der ersten und der zweiten Liste erneut erstellt und anschließend eine signierte Nachricht, die den einwandfreien Empfang der zweiten Liste bestätigt, durch den zweiten Empfänger (4) an den ersten Empfänger (3) gesendet; und

- verwendet der zweite Empfänger (4) die dritte Liste als mit dem ersten Empfänger (3) geteilten Schlüssel; verwendet der erste Empfänger (3) unmittelbar nach dem Empfangen der von dem zweiten Empfänger im vorhergehenden Schritt übertragenen Nachricht durch den ersten Empfänger (3) die dritte Liste als geteilten Schlüssel bei Austauschen mit dem zweiten Empfänger (4).

wobei insbesondere ein polarisierendes Filter (46) dem zweiten Empfänger (4) vorgelagert angeordnet ist.

## Claims

1. Quantum communication system (1) comprising:

   • an emitter (2) of entangled photons, comprising a source configured in order to generate at least one pair of entangled photons comprising a first photon (P1) emitted on a first propagation path (D1) and simultaneously a second photon (P2) emitted on a second propagation path (D2) different to the first propagation path;
   • a first receiver (3) arranged on the first propagation path (D1), comprising:

      - at least one first instrument (35) arranged in order to absorb the first photon (P1) in one of two complementary polarizations, the polarization of the photon (P1) being indeterminate in the observable basis according to which the first instrument absorbs the photons,
      - an optical selector (30) arranged upstream of said at least one first instrument (35) and configured in order either to allow the first photon (P1) to pass through towards said at least one first measuring instrument (35) or to prevent it from being measured;
   • a second receiver (4) arranged on the second propagation path (D2) so as to be reached by the second photon (P2) after the first photon (P1) has reached the optical selector (30) and/or after it has been able to reach the instrument (35) of the first receiver (3), said second receiver (4) comprising an optical amplifier (40) making it possible to multiply the second photon (P2) while preserving its polarization, and, arranged downstream of the amplifier, a measuring instrument (45) making it possible to measure the average quantum state of the multiplied photons (P20).

2. System according to the preceding claim, the first receiver (3) comprising at least one second instrument (35), the optical selector (30) being arranged upstream of the first and second instruments (30) and configured in order either to allow the first photon (P1) to pass through while directing it towards one or other of the instruments or to prevent it from being absorbed.

3. System according to either of the preceding claims, the emitter (2) being configured in order to generate a plurality of pairs of entangled photons successively.

4. System according to any one of the preceding claims, the optical selector (30) comprising a reflector (310), in particular a controlled mirror, and/or the optical selector comprising a device (310; 330) whose refractive index and/or reflection direction are controlled, in particular by using an electric field or a light flux.

5. System according to any one of the preceding claims, comprising a device (5) for protecting the quantum state of at least one photon, in particular a device which prevents the measurement or absorption of at least one photon, which is arranged in proximity to the first receiver (3) so as to make it possible to protect the quantum state of the first photon (P1) in the event that it is prevented from being measured by the optical selector (30), said quantum state of the first photon (P1) being protected at least until the second photon (P2) has been multiplied at the second receiver (4), in particular the device for protecting the quantum state (5) comprising a transparent space, in particular a transparent space and at least one mirror.

6. System according to any one of the preceding claims, at least one instrument (35) of the first receiver comprising at least one filter (350; 360) making it possible to send the first photon towards at least one photon detector (355), in particular towards one or other of two photon detectors (355) according to the polarization state of the first photon, the filter preferably being a prism or plate made of a birefringent material.

7. System according to one of the preceding claims, the instrument (45) of the second receiver (4) comprising at least one photon detector (455) arranged in order to measure the polarization of the light (P20) originating from the multiplication of the second photon (P2), and/or the measuring instrument (45) of the second receiver (4) comprising a succession of semireflective plates arranged downstream of the optical amplifier (40), said plates directing the flux of multiplied photons (P20) with an equal intensity towards polarizing filters, downstream of which detectors are arranged.

8. System according to any one of the preceding claims, the optical amplifier (40) being a doped-fibre amplifier, and/or the second receiver (4) comprising a switch (50) arranged in front of the optical amplifier (40) and configured in order to absorb or reflect the photon or photons subsequent to a first photon reaching said second receiver in a predetermined time interval.

9. System according to any one of the preceding claims, the first receiver (3) and/or the second receiver (4) comprising one or more dichroic filters (420), said filters preferably being arranged in front of the instrument or instruments (35; 45), or in front of the optical selector (30) for the first receiver, and/or the emitter (2) and each of the receivers (3; 4) comprising a clock, the clocks of the emitter and of the receivers being synchronized with one another.

10. System according to any one of the preceding claims, comprising a second emitter (22) capable of generating one or more pairs of entangled photons, the second emitter being located closer to the second receiver (92) than to the first receiver (91).

11. Quantum communication method using the system according to any one of Claims 1 to 10, comprising the steps consisting in:

• generating a pair of entangled photons from an emitter (2), the first photon (P1) of the pair being emitted towards a first receiver (3) and the second photon (P2) of the pair being emitted simultaneously towards a second receiver (4), the first and second photons being entangled, the second receiver (4) being located on the propagation path (D2) of the second photon (P2) further away from the emitter (2) than the first receiver (3), so that it arrives there later,
• according to the information to be transmitted ("0", "1", "2"), selecting to absorb or not absorb the first photon (P1) in one of two pairs of complementary polarizations when it reaches the first receiver (3), by using an optical selector (30) which does or does not direct said photon (P1) towards an instrument (35) or towards one of a plurality of instruments (35),
• in the event that the selection is made not to absorb the photon in a predefined polarization, trapping said first photon (P1) in a protection device (5) making it possible to avoid its absorption at least so long as the second photon (P2) has not reached the second receiver (4),
• at the second receiver (4), duplicating the second photon (P2) to form a flux of multiplied photons (P20) by using an amplification device (40), each multiplied photon (P20) having preserved the quantum state of the second photon (P2),
• measuring the average quantum state of multiplied photons (P20) and determining according to this measurement whether the first photon (P1) has been absorbed at the first receiver (3), and/or with which instrument, in order to deduce therefrom the information transmitted ("0", "1") by the first receiver (3).

12. Method according to the preceding claim, the polarization of the pair of entangled photons being indeterminate in the observable basis or bases, in which the instruments of the first receiver (35) absorb them.

13. Method according to Claim 11 or 12, the pair of entangled photons reaching the receivers (3; 4) with a linear entangled polarization, one of the two complementary absorption polarizations being circular, the second receiver (4) being arranged in order to distinguish whether the average polarization of the flux of multiplied photons (P20) is circular or linear, and to determine according to this distinction whether or not the first photon has been measured, or

the pair of entangled photons reaching the receivers (3; 4) with a circular entangled polarization, the quantum state measured at the first receiver (3) being a linear polarization, the second receiver (4) being arranged in order to distinguish whether the average polarization of the flux of multiplied photons (P20) is circular or linear, and to determine according to this distinction whether or not the first photon (P1) has been measured, or
the pair of entangled photons reaching the receivers with a vertical or horizontal linear polarization, the quantum state measured at the first receiver (3) being a linear polarization at 45° or -45° to the vertical or the horizontal, the second receiver (4) being arranged in order to distinguish whether the average linear polarization of the flux of multiplied photons (P20) is at 45° or -45°, or the vertical or the horizontal, and to determine according to this distinction whether or not the first photon (P1) has been measured.

14. Method according to any one of Claims 11 to 13, a plurality of pairs of entangled photons being generated successively by the emitter (2), each pair of photons making it possible to transmit an item of information ("0", "1", "2") from the first receiver (3) to the second receiver (4).

15. Method according to one of Claims 11 to 14, wherein it is verified that an item of information transmitted by a flux of photons from the emitter (2) to the receiver (4) has not been eavesdropped by implementing the following steps:

- the second receiver (4) establishes a first list of the reception dates of the photons that conveyed the item of information, and the relative polarization designating that of the two complementary polarizations in which each photon was received;
- the second receiver (4) generates a message containing the list collected in the preceding step, creates an electronic signature of this list and transmits said list and the signature to the receiver (3);
- the first receiver (3) receives the list and the signature then verifies said signature;
- the first receiver (3) makes a second list consisting of elements of the first list for which the relative polarizations of the photons received by the first and second receivers (3) and (4) are equal, or indeed for which the entangled photon never reached the first receiver (3), two entangled photons having different relative polarizations;
- if the number of elements of the second list restricted to pairs of entangled photons each of the two photons of which reached their respective receivers is lower than the product of a predetermined ratio multiplied by the count of the elements of the first list restricted to pairs of entangled photons each of the two photons of which reached their respective receivers, then the item of information is declared to have been transmitted without having been eavesdropped, in particular
- if the item of information is declared to have been transmitted without having been eavesdropped, then the second list is sent signed by the first receiver (3) to the second receiver (4), then a third list is created by the first receiver (3), this list consisting of the relative polarizations of the photons featuring in the first list but not featuring in the second list,
- on reception of the second list by the second receiver (4) and after verification of the signature, the third list is recreated in the second receiver (4) using the first and second lists, then a signed message, confirming successful receipt of the second list, is sent by the second receiver (4) to the first receiver (3); and
- the second receiver (4) uses the third list as shared key with the first receiver (3), and, on reception by the first receiver (3) of the message transmitted by the second receiver in the preceding step, the first receiver (3) uses the third list as shared key in exchanges with the second receiver (4),

a polarizing filter (46) being in particular placed upstream of the second receiver (4).

[Fig 1A]

FIG.1A

[Fig 1B]

FIG.1B

[Fig 2A]

FIG.2A

[Fig 2B]

C1　　　C2

P　　　P

D

# FIG.2B

[Fig 3]

# FIG.3

| 2 | P | 6 | 7 | 8 | D | 3,4 |

[Fig 4A]

30

325

P1

D3

D1

315

310

320

FIG.4A

D1'

35

[Fig 4B]

30

# FIG.4B

P1

D1

315

320

310    D1'    D3    325

35

[Fig 4C]

30

# FIG.4C

330    345    325

P1    D3

F    35

335    D1'

340

[Fig 5A]

# FIG.5A

[Fig 5B]

# FIG.5B

[Fig 5C]

**FIG.5C**

528

526 →                    → 540

528

528

529

527        527

[Fig 6]

32b

**FIG.6**

310        322        321        310

E

P1

E2

E1

E'

P1

322

[Fig 7]

FIG.7

[Fig 8]

FIG.8

[Fig 9]

4

**FIG.9**

410   401   402

F   N x P20

P2

400

45

40

[Fig 10A]

4

40   45

452   452   452   453

N x P20

350   350

455   350

**FIG.10A**

455   455

455

[Fig 10B]

350

455

460

463

466

461

462 464

465

467

# FIG.10B

[Fig 11A]

10    11    12    15    16

P1
2
P2

P1
P1
30
Bit « 0 »

5
P1

P2
40
P20

P20
45
Bit « 0 »

# FIG.11A

[Fig 11B]

FIG.11B

[Fig 12]

FIG.12

[Fig 13]

## FIG.13

[Fig 14]

## FIG.14

[Fig 15]

FIG.15

[Fig 16]

FIG. 16

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- KR 101003886 B1
- US 20210165914 A1

**Littérature non-brevet citée dans la description**

- **SHASI PRABKHAR et al.** Two-photon quantum interference and entanglement at 2.1 μm. *Sci Adv*, 2020
- **VISHERATINA, ANASTASIA ; NICHOLAS A. KOTOV.** Inorganic nanostructures with strong chiroptical activity.. *CCS Chemistry*, 2020, vol. 2 (3), 583-604
- **MAI, WENDING et al.** Broadband transparent chiral mirrors: Design methodology and bandwidth analysis.. *AIP Advances*, 2019, vol. 9 (4), 045305
- **AMANTI**. les sources intégrées de photons intriqués au cœur des technologies quantiques. *Photoniques*, 2018 (91)
- **SMITH**. Photon pair generation in birefringent optical fibers. *Optics Express*, 2009, vol. 17 (26)